# EUROPEAN PATENT APPLICATION

(11) **EP 4 707 631 A1**
(43) Date of publication of application: **11.03.2026**
(21) Application number: 25201186.1
(22) Date of filing: 09.09.2025
(51) Int. Cl.: F16D 21/06, F16D 25/12

(54) **COMPACT PARALLEL DOUBLE CLUTCH UNIT**

(30) Priority: 09.09.2024 EP 24199246
(71) Applicant: Transmisiones Y Equipos Mecánicos, S.A. de C.V., 8210 Zedelgem (BE)
(72) Inventor: COPPENS, Alexander, 3520 Zonhoven (BE); MOENS, Ilse, 8200 Brugge (BE); VAN ACKER, Kevin, 8000 Brugge (BE); GEREELS, Nick, 8200 Brugge (BE); DE LANDTSHEERE, Jannick, 8310 Sint-Kruis (BE); DE VISSCHER, Nico, 9270 Laarne (BE)
(74) Representative: De Clercq & Partners

(57) **Abstract**

Provided is double clutch unit (100) for a transmission comprising: an engine (E) side friction clutch pack, ES clutch pack (40), and a gearbox (G) side friction clutch pack, GS clutch pack (30); a clutch input shaft (60) having an axis (A-A') of rotation; an axial liquid distributor (90), ALD (90), configured for transport of at least one liquid in an axial direction between the (E) side of the clutch input shaft and a location towards the (G) side of the clutch input shaft (60); wherein - a first ALD conduit (24c) of the plurality of ALD conduits services both an ES clutch pack piston balancing chamber (450) and one or more GS cooling channels (74c) for providing cooling liquid to the GS clutch pack (30); and a second ALD (24d) of the plurality of ALD conduits, different from the first ALD conduit (24c), services both a GS clutch pack piston balancing chamber (350) and one or more ES cooling channels (74d) for providing cooling liquid to the ES clutch pack (40).

## Description

### Field

Provided is a double clutch unit, in particular a configuration of double clutch unit having compact form and ease of assembly and disassembly.

### Background

In general, double clutches are used in DCTs (double clutch transmissions) to transfer speed and torque from engine (internal combustion engine or electric machine) or flywheel to the gearbox. Clutch outputs to the gearbox are two concentric shafts where one is used typically for the odd gears and one for the even and reverse gears. Both power paths are controlled separately by one of the two clutches in the double clutch. Both clutches are activated separately by hydraulic pressure and can be open, slipping (with differential speed over the clutch) or closed (no differential speed).

Space for a double clutch assembly is often limited in a sports car transaxle DCT where the axial packaging space is limited. This axial space is determined by the position of engine and flywheel with respect to the side shafts (wheels) and is an input for the design given by the customer. The limited radial packaging space forces the usage of two clutches packs disposed parallel. For the high end sports car application, a multi-plate clutch is used that is actively cooled by forced oil lubrication. The configuration of each clutch packs is dependent on torque requirements and thermal loads of the slipping clutches in manoeuvres specified by the customer. An ability to adjust a clutch pack even after assembly or during its service often means a comprise to a maximum torque limit torque since parts that are removable are connected to an input shaft by using dismountable attachment elements such as splines.

Described herein is a configuration of a double clutch unit that solves problem of axially and/or radially limited space within a vehicle, high torque transfer and ease of assembly and disassembly.

### Summary

Provided herein is a double clutch unit (100) for a transmission comprising:
- an engine (E) side friction clutch pack, ES clutch pack (40), and a gearbox (G) side friction clutch pack, GS clutch pack (30);
- a clutch input shaft (60) having an axis (A-A') of rotation;
wherein:
- each clutch pack (40,30) has a clutch pack input (42, 32) and clutch pack output (44, 34);
- the clutch packs (40,30) are disposed in a parallel arrangement axially flanking a common clutch reaction plate (70);
- each clutch pack input (42, 32) is central of the clutch pack output (44, 34) such that torque is transmitted across each activated clutch pack (40, 30) in a central to peripheral direction;
- torque from the clutch input shaft (60) is transmitted to each clutch pack input (42, 32) via a pair of drive plates (46, 36), one for each clutch pack input (42, 32);
- each drive plate (46, 36) is axially and rotationally fixed by one or more welded joints (46a, 36a) to the clutch input shaft (60);
- the pair of drive plates (46, 36) is arranged axially flanking the common clutch reaction plate (70).

Further provided herein is a double clutch unit (100) for a transmission comprising:
- an engine (E) side friction clutch pack, ES clutch pack (40), and a gearbox (G) side friction clutch pack, GS clutch pack (30);
- a clutch input shaft (60) having an axis (A-A') of rotation;
- an axial liquid distributor (90), ALD (90), configured for transport of at least one liquid in an axial direction between the (E) side of the clutch input shaft and a location towards the (G) side of the clutch input shaft (60),
wherein:
- each clutch pack (40,30) has a clutch pack input (42, 32) and clutch pack output (44, 34);
- the clutch packs (40,30) are disposed in a parallel arrangement axially flanking a common clutch reaction plate (70);
- each clutch pack input (42, 32) is central of the clutch pack output (44, 34) such that torque is transmitted across each activated clutch pack (40, 30) in a central to peripheral direction;
- the ALD (90) comprises a plurality of axial liquid distributor, ALD conduits (24, 24c, 24d), each for the transport of liquid in an axial direction;
- a first ALD conduit (24c) of the plurality of ALD conduits services both an ES clutch pack piston balancing chamber (450) and one or more GS cooling channels (74c) for providing cooling liquid to the GS clutch pack (30);
- a second ALD (24d) of the plurality of ALD conduits, different from the first ALD conduit (24c), services both a GS clutch pack piston balancing chamber (350) and one or more ES cooling channels (74d) for providing cooling liquid to the ES clutch pack (40);
- the plurality of axial liquid distributor, ALD conduits (24, 24c, 24d), are disposed central of the ES clutch pack piston balancing chamber (450) and of the GS clutch pack piston balancing chamber (350) when viewed in on an axial projection of the double clutch unit (100).

The plurality of ALD conduits may be disposed within a body (62) of the clutch input shaft (60), and are (known as) clutch input shaft, CIS, conduits (64c, 64d).

Each CIS conduit (64c, 64d) of the plurality of CIS conduits (64) may be provided with a CIS access port (66c, 66d) connecting the CIS conduit (64c, 64d) to an exterior (e.g. radial or axial outer surface) of the body (62) of the clutch input shaft (60), wherein the CIS access port (66c, 66d) is:
- configured for passage of the liquid to/from the CIS conduit (64c, 64d); and
- disposed on the clutch input shaft (60) body (62) at an axial position that is at an (E) side of ES clutch pack (40) and does not axially overlap with the ES clutch pack (40).

The double clutch unit (100) may further comprise a stator (80) disposed within an annular groove or within a bore of the clutch input shaft (60) body (62), wherein:
- the stator (80) has a body (82); and
- the plurality of ALD conduits (24, 84; 24c, 84c; 24d, 84d) is disposed within the stator body (82), and are (known as) stator conduits (84c, 84d).

Each stator conduit (84c, 84d) of the plurality of stator conduits may be provided with a stator access port (86c, 86d) connecting the stator conduit (84c, 84d) to an exterior (e.g. radial or axial outer surface) of the body (82) of the stator (80), wherein the stator access port (86) is:
- configured for passage of the liquid to/from the stator conduit (86c, 86d); and
- disposed on the stator (80) body (82) at an axial position that is at an (E) side of ES clutch pack (40) and does not axially overlap with the ES clutch pack (40).

The double clutch unit (100) may further comprise:
- an ES clutch output hub (49) attached in fixed rotational relation to the ES clutch pack output (44) and configured for dismountable coupling to a first input shaft of a gearbox;
- an GS clutch output hub (39) attached in fixed rotational relation to the GS clutch pack output (34) and configured for dismountable coupling to a second input shaft of a gearbox;
wherein both the ES clutch output hub (49) and GS clutch output hub (39) are disposed at an axial position that is at a (G) side of the GS clutch pack (30) and does not axially overlap with the GS clutch pack (30).

The double clutch unit (100) may further comprise:
- an ES clutch unit output drum (48) attached and rotationally fixed to the ES clutch output hub (49), wherein:
   - the ES clutch unit output drum (48) is attached and rotationally fixed to the ES clutch pack output (44);
      - thereby transmitting torque between the ES clutch pack output (44) and the ES clutch output hub (49);
- a GS clutch unit output drum (38) attached and rotationally fixed to the GS clutch output hub (39), wherein
   - the GS clutch unit output drum (38) attached and rotationally fixed to the GS clutch pack output (34);
- thereby transmitting torque between the GS clutch pack output (34) and the GS clutch output hub (39).

According to a preferred aspect:
- the ES clutch unit drive plate (46) is rotationally and axially fixed to a portion of the ES clutch pack input (42) that is located on the (G) side of the ES clutch pack input (42); and
- the GS clutch unit drive plate (36) is rotationally and axially fixed to a portion of the GS clutch pack input (32) that is located on the (E) side of the GS clutch pack input (32).

According to a preferred aspect:
- torque from the clutch input shaft (60) is transmitted to each clutch pack input (42, 32) via a pair of drive plates (46, 36), one for each clutch pack input (42, 32);
- the ES clutch unit drive plate (46) is rotationally and axially fixed to a portion of the ES clutch pack input (42) that is located on the (G) side of the ES clutch pack input (42); and
- the GS clutch unit drive plate (36) is rotationally and axially fixed to a portion of the GS clutch pack input (32) that is located on the (E) side of the GS clutch pack input (32).

According to another preferred aspect:
- the ES clutch unit drive plate (46) is disposed only central of the ES clutch pack input (42); and
- the GS clutch unit drive plate (36) is disposed only central of the GS clutch pack input (32).

The double clutch unit (100) may further comprise:
- an ES clutch unit output drum (48) attached and rotationally fixed to a ES clutch output hub (49), wherein:
   - the ES clutch unit output drum (48) is attached and rotationally fixed to the ES clutch pack output (44);
      - thereby transmitting torque between the ES clutch pack output (44) and the ES clutch output hub (49);
   - the ES clutch output hub (49) is disposed an axial position that is at a (G) side of the GS clutch pack (30) and does not axially overlap with the GS clutch pack (30);
- a GS clutch unit output drum (38) attached and rotationally fixed to a GS clutch output hub (39), wherein
   - the GS clutch unit output drum (38) attached and rotationally fixed to the GS clutch pack output (34);
      - thereby transmitting torque between the GS clutch pack output (34) and the GS clutch output hub (39);
   - the GS clutch output hub (39) is an axial position that is disposed at a (G) side of
the GS clutch pack (30) and does not axially overlap with the GS clutch pack (30). The clutch input shaft (60) typically has a body (62) disposed with at least one clutch input shaft, CIS, conduit (64) of an axial liquid distributor (90) for an axial transport of a liquid from the (E) side of the clutch input shaft (60) towards the (G) side of the clutch input shaft (60).

Each CIS conduit (64) of the one or more CIS conduits (64) is preferably provided with a CIS access port (66) connecting the CIS conduit (64) to an outer surface of the body (62) of the clutch input shaft (60), wherein the CIS access port (66) is:
- configured for passage of the liquid to/from the CIS conduit (64);
- disposed on the clutch input shaft (60) body (62) at an axial position that is at an (E) side of ES clutch pack (40) and does not axially overlap with the ES clutch pack (40).

Each CIS conduit (64) of the one or more CIS conduits (64) is preferably provided with a CIS access port (66) connecting the CIS conduit (64) to an exterior (e.g. radial or axial outer surface) of the body (62) of the clutch input shaft (60), wherein the CIS access port (66) is:
- configured for passage of the liquid to/from the CIS conduit (64);
- disposed on the clutch input shaft (60) body (62) at an axial position that is at an (E) side of ES clutch pack (40) and does not axially overlap with the ES clutch pack (40).

The double clutch unit (100) preferably further comprises a stator (80) disposed within an annular groove of the clutch input shaft (60) body (62), wherein the stator (80) has a body (82) disposed one or more stator conduits (84) of an axial liquid distributor (90) for an axial transport of a liquid from the (E) side of the stator (80) towards the (G) side of the stator (80).

Each stator conduit (84) of the one or more stator conduits (84) is preferably provided with a stator access port (86) connecting the stator conduit (84) to an outer surface of the body (82) of the stator (80), wherein the stator access port (86) is:
- configured for passage of the liquid to/from the stator conduit (84);
- disposed on the stator (80) body (82) at an axial position that is at an (E) side of ES clutch pack (40) and does not axially overlap with the ES clutch pack (40).

Each stator conduit (84) of the one or more stator conduits (84) is preferably provided with a stator access port (86) connecting the stator conduit (84) to an exterior (e.g. radial or axial outer surface) of the body (82) of the stator (80), wherein the stator access port (86) is:
- configured for passage of the liquid to/from the stator conduit (84);
- disposed on the stator (80) body (82) at an axial position that is at an (E) side of

ES clutch pack (40) and does not axially overlap with the ES clutch pack (40).
According to a preferred aspect:
- the ES clutch pack (40) comprises a plurality of friction plates (47) intercalated between a plurality of separator plates (45);
- the GS clutch pack (30) comprises a plurality of friction plates (37) intercalated between a plurality of separator plates (35); and
- at least the
   ES clutch pack (40) friction plates (47) and separator plates (45); and
   GS clutch pack (30) friction plates (37) and separator plates (35)
have mirrored symmetric identity across a mirror plane perpendicular to an axis of rotation (A-A') of the ES clutch pack (40) and GS clutch pack (30).

The double clutch unit (100) preferably further comprises a plurality of springs, wherein
- each spring is disposed:
   - between each pair of separator plates (45, 35);
- at a central end of a gap between the pairs of separator plates (45,35);
- the plurality of springs are (each spring is) biased to maintain the respective separator plates (45,35) spaced apart to reduce drag torque.

According to a preferred aspect:
- the ES clutch pack (40) further comprises an ES clutch pack piston (420) for controllable activation of the ES clutch pack (40), wherein the ES clutch pack piston (420) comprises an annular pressure plate (420a) configured for application of activating force to a 1st end (41a) of the ES clutch pack (40); and
- the GS clutch pack (30) further comprises an GS clutch pack piston (320) for controllable activation of the GS clutch pack (30), wherein the GS clutch pack piston (320) comprises an annular pressure plate (320a) configured for application of activating force to a 1st end (31a) of the GS clutch pack (40).

### Brief description of the drawings

The following description of the figures of specific embodiments of the invention is merely exemplary in nature and is not intended to limit the present teachings, their application or uses.
**FIG. 1** illustrates a longitudinal cross-section of a double clutch unit (upper half) as described herein.
**FIG. 2** illustrates a longitudinal cross-section of a double clutch unit as shown in FIG. 1, wherein the input shaft is disposed with a conduit of an axial liquid distributor for an axial transport of a liquid towards a (G) side of the double clutch unit.
**FIG. 3** illustrates a longitudinal cross-section of a double clutch unit as shown in FIG. 1, further provided with a stator disposed with a conduit of an axial liquid distributor for an axial transport of a liquid towards a (G) side of the double clutch unit.
**FIG. 4** illustrates a longitudinal cross-section of a double clutch unit as shown in FIG. 1, additionally provided with a pair of pistons.
**FIG. 5** illustrates an exemplary longitudinal cross-section of a double clutch unit as described herein, wherein the input shaft is disposed with a conduit of an axial liquid distributor for an axial transport of a liquid towards a (G) side of the double clutch unit.
**FIG. 5A** is a detail of FIG. 5 (and is applicable also to FIGs. 6), showing only the upper half, and highlights seals and bearings.
**FIG. 6** illustrates the double clutch unit of FIG. 5, at a different axial rotation position, thereby revealing different conduits of the input shaft.
**FIG. 7** illustrates an exemplary longitudinal cross-section of a double clutch unit as described herein, provided with a stator.
**FIG. 7A** is a detail of FIG. 7, showing only the upper half, and highlights seals and bearings.
**FIG. 8** **Panel A** illustrates the clutch input shaft based on the longitudinal cross-section of the double clutch unit as shown in FIG. 1, showing a clutch input shaft conduit servicing both a ES balancing chamber and GS cooling channels for the GS clutch pack.

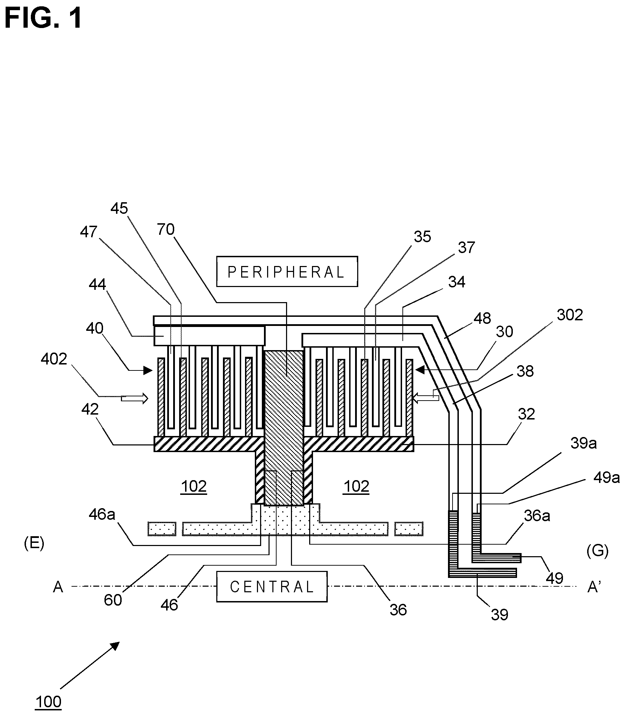

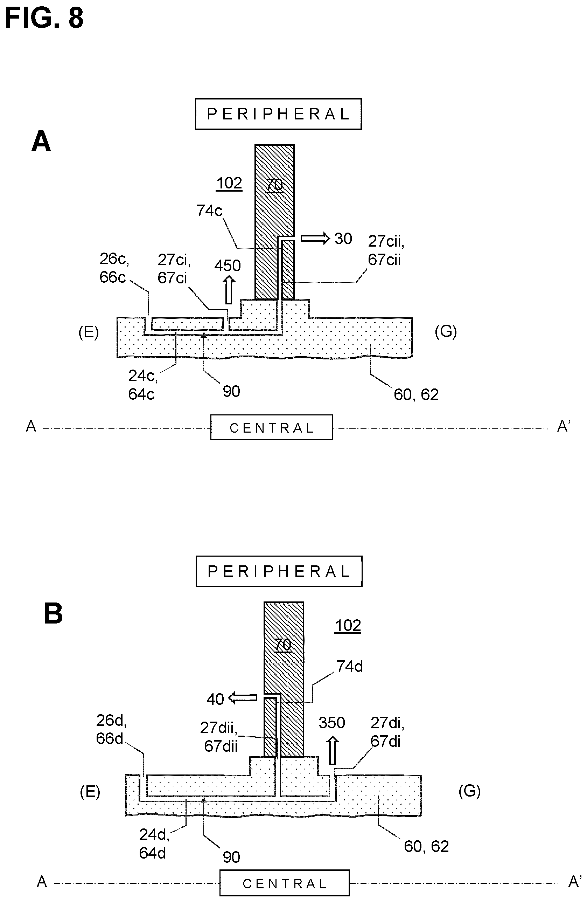

**FIG. 8** **Panel B** illustrates the clutch input shaft based on the longitudinal cross-section of the double clutch unit as shown in FIG. 1, showing a clutch input shaft conduit servicing both a GS balancing chamber and ES cooling channels for the ES clutch pack.

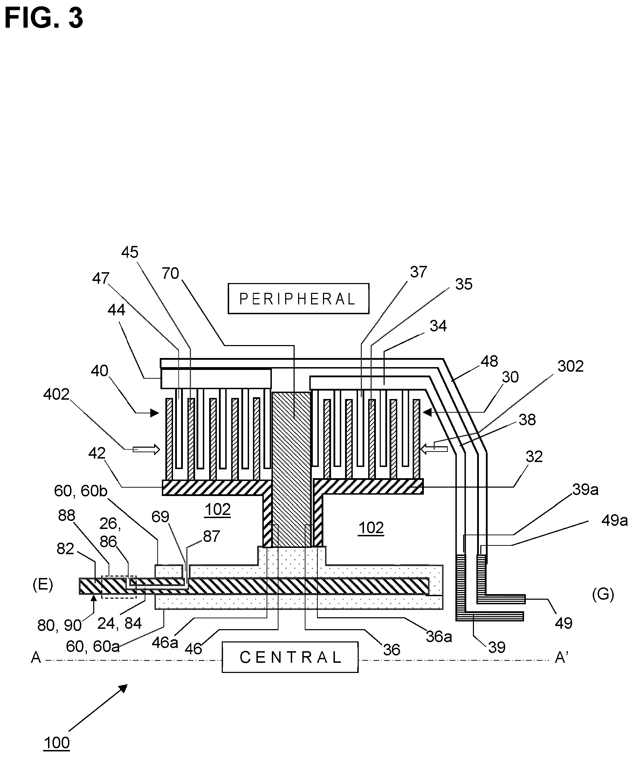

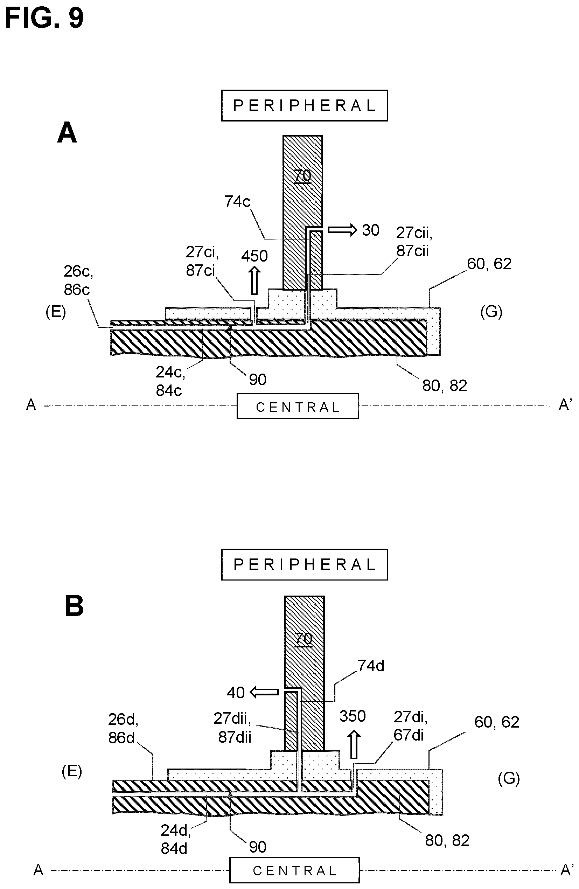

**FIG. 9** **Panel A** illustrates the clutch input shaft based on the longitudinal cross-section of the double clutch unit as shown in FIG. 3, showing a stator conduit servicing both a ES balancing chamber and GS cooling channels for the GS clutch pack.
**FIG. 9** **Panel B** illustrates the clutch input shaft based on the longitudinal cross-section of the double clutch unit as shown in FIG. 3, showing a stator conduit servicing both a GS balancing chamber and ES cooling channels for the ES clutch pack.

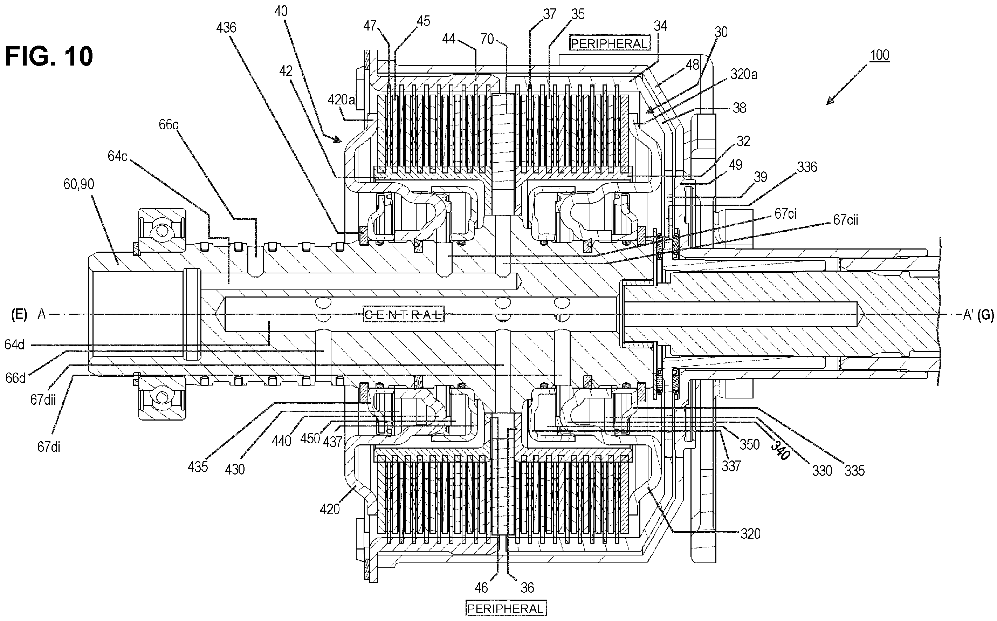

**FIG. 10** illustrates an exemplary longitudinal cross-section of a double clutch unit as described herein, wherein the input shaft is disposed with a conduit of an axial liquid distributor for an axial transport of a liquid towards a (G) side of the double clutch unit which is in a cross-feed configuration. Upper and lower halves show input shaft in different axial rotational positions.

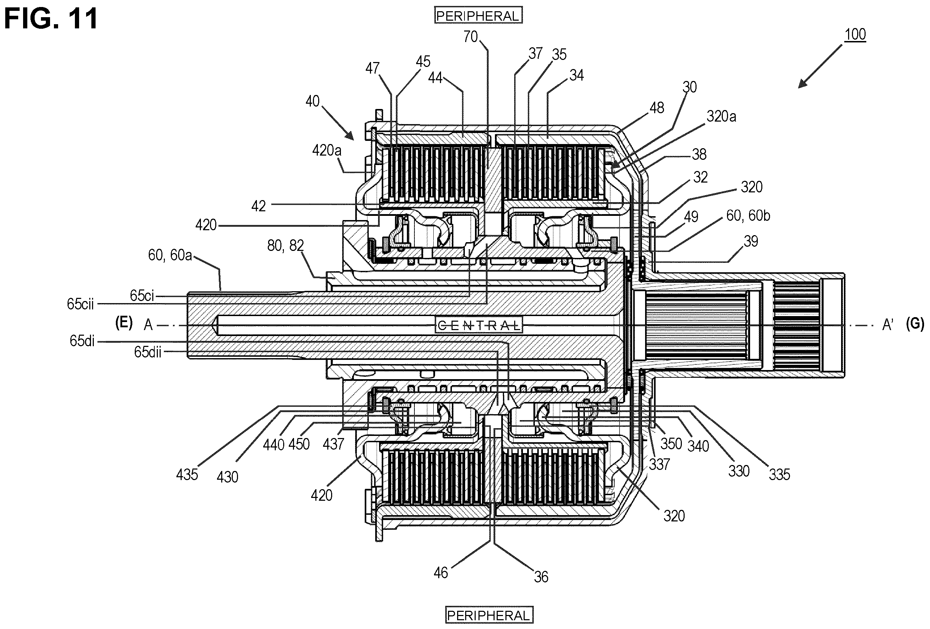

**FIG. 11** illustrates an exemplary longitudinal cross-section of a double clutch unit as described herein provided with a stator, which is in the cross-feed configuration.

### Description of embodiments

As used herein, the singular forms "a", "an", and "the" include both singular and plural referents unless the context clearly dictates otherwise.

The terms "comprising", "comprises" and "comprised of" as used herein are synonymous with "including", "includes", "containing", or "contains", and are inclusive or open-ended and do not exclude additional, non-recited members, elements or method steps. The terms also encompass "constituted of", "consists in", "consisting of", and "consists of", and also the terms "consisting essentially of", "consisting essentially in" and "consists essentially of", which enjoy well-established meanings in patent terminology.

The recitation of numerical ranges by endpoints includes all intervening values between the lower and upper endpoints, as well as the recited endpoints. Intervening values may be integers or, where applicable, fractions, i.e., more broadly any real numbers such as any rational numbers. This applies to numerical ranges irrespective of whether they are introduced by the expression "from... to..." or the expression "between... and..." or another expression. Any numerical range recited herein is intended to include all subranges subsumed therein. For example, each sub-range between any stated value in a stated range and any other stated value in that stated range is also specifically disclosed. Each sub-range between any stated value in a stated range and either the lower endpoint or the upper endpoint of the stated range is also specifically disclosed. The stated value may be an isolated value or an endpoint of a range subsumed by or overlapping with the stated range. For example, for a stated range with lower endpoint L1 and upper endpoint U1 (i.e., stated range L1-U1) and a stated sub-range nested within the stated range with lower endpoint L2 and upper endpoint U2 (i.e., stated sub-range L2-U2), also specifically disclosed are the subranges L1-L2, L1-U2, L2-U1, and U2-U1.

The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

Whereas the terms "one or more" or "at least one", such as one or more members or at least one member of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members. In another example, "one or more" or "at least one" may refer to 1, 2, 3, 4, 5, 6, 7 or more.

As used herein, the term "and/or" when used in a list of two or more items, means that any one of the listed items can be employed by itself or any combination of two or more of the listed items can be employed. For example, if a list is described as comprising group A, B, and/or C, the list can comprise A alone, B alone, C alone, A and B in combination, A and C in combination, B and C in combination, or A, B, and C in combination.

The discussion of the background to the invention herein is included to explain the context of the invention. This is not to be taken as an admission that any of the material referred to was published, known, or part of the common general knowledge in any country as of the priority date of any of the claims.

Throughout this disclosure, various publications, patents and published patent specifications are referenced by an identifying citation. All documents cited in the present specification are hereby incorporated by reference in their entirety. In particular, the teachings or sections of such documents herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation or meaning is meant to apply throughout this specification, i.e., also in the context of other aspects or embodiments of the invention, unless otherwise defined.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

Reference throughout this specification to "one embodiment", "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

Similarly, it should be appreciated that in the description of illustrative embodiments of the invention, various features of the invention are sometimes grouped together in a single embodiment, figure, or description thereof for the purpose of streamlining the disclosure and aiding in the understanding of one or more of the various inventive aspects.

In the present description of the invention, reference is made to the accompanying drawings that form a part hereof, and in which are shown by way of illustration only of specific embodiments in which the invention may be practiced. Parenthesized or emboldened reference numerals affixed to respective elements merely exemplify the elements by way of example, with which it is not intended to limit the respective elements. Unless otherwise indicated, all figures and drawings in this document are not to scale and are chosen for the purpose of illustrating different embodiments of the invention. In particular the dimensions of the various components are depicted in illustrative terms only, and no relationship between the dimensions of the various components should be inferred from the drawings, unless so indicated.

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as follows in the spirit and scope of the appended claims.

The clutch unit (100) has a central axis (A-A') (e.g. FIGs. 1 to 11) which is an axis co-axial with an axis of rotation of the clutch packs (42,32) and of other rotation components (e.g. clutch input shaft (60), clutch pack pistons (420, 320). An axis of rotation as mentioned herein may similar be labelled " A-A' " when it is co-axial with the central axis (A-A').

A peripheral side, orientation or direction means radially away from the central axis (A-A') of the clutch unit (100). The terms "peripheral to" or "peripheral of" means radially away from the central axis (A-A') of the clutch unit (100).

A central side, orientation or direction means radially towards or on the central axis (A-A') of the clutch unit (100). The terms "central to" or "central of" means radially towards the central axis (A-A') of the clutch unit (100).

Axial or axially means along or in a direction along an axis parallel to the central axis (A-A').

An engine (E) side is closer to the connecting engine/electric machine/flywheel. A gearbox (G) side is closer to the connecting gearbox. Axially fixed refers to parts where relative sliding in an axial direction is prevented (*e.g.* by a stop member or snap ring, weld). Rotationally fixed refers to parts where rotation is prevented (*e.g.* by a spline, weld).

A hub as described herein comprises a hollow central cylindrical part disposed with an internal or external spline connector on an inside or outside surface respectively, and a flange part rotationally and axially attached and fixed to the hollow cylindrical part. The flange projects outwards from the hollow cylindrical part. Torque is transmitted via the hub to parts of the double clutch unit (100) that are concentrically arranged and radially distant. The flange is typically annular, attaching to an edge of the hollow cylindrical part. The flange may or may not be flat, it may be a continuous or discontinuous circle. The flange may be plate like.

A drum as described herein comprises annular ring part disposed with an internal or external spline connector on an inside or outside surface of the annular ring part respectively, and a side face rotationally and axially attached and fixed to the annular ring part (*e.g.* by weld or bolt). The annular ring part is disposed on a periphery of the drum. The side face projects inwards from the peripheral annular ring towards a central axis of rotation of the drum. Torque is transmitted via the drum to parts of the double clutch unit (100) that are concentrically arranged and radially distant. The side face is typically circular or frustrum-shaped or any other suitable shape, attaching at its outer circumference to an edge of the annular ring part. The side face may or may not be flat. It may have a continuous or discontinuous body.

The term "serve" or "services" when referring to a conduit means that the conduit provides a channel for transport of a liquid whose function is to serve a purpose depending on a destination for the liquid. When a conduit services a balancing chamber, it means that the conduit provides liquid to and/or from the balancing chamber. When a conduit services a cooling channel, it means that the conduit provides liquid to the cooling channel. It is understood that the serving conduit might or might not be in direct mechanical contact with the balancing chamber or with the cooling channel. Where the conduit is disposed within a stator, liquid from the conduit typically pass through an concentrically peripherally-disposed input shaft, hence, the conduit is not direct mechanical contact with balancing chamber or with the cooling channel, but liquid from the conduit passes through one or more apertures in the input shaft in order to reach the balancing chamber or with the cooling channel.

A balancing chamber is understood in the art of clutches - prevents unintended closure of an open clutch caused by centrifugal force applied to the piston chamber.

An axial projection is a schematic view along the central axis (A-A'), wherein components of the clutch are viewed collapsed onto a single (2D) plane perpendicular to the central axis (A-A').

Provided herein is a double clutch unit (100) for a transmission, having an axial engine side (E) and an axial gearbox (G) side, a central direction radially towards a central axis of rotation (of a clutch input shaft (60)) and a peripheral direction radially away from the central axis of rotation. An exemplary double clutch unit (100) is illustrated in each of **FIGs. 1** to **11****.**

The double clutch unit (100) comprises an engine (E) side friction clutch pack, ES clutch pack (40), and a gearbox (G) side friction clutch pack, GS clutch pack (30). Each clutch pack (40,30) has an axial length defined by the terminal plates of the clutch pack.

Each clutch pack (40,30) comprises a plurality of friction plates (47,37) intercalated between a plurality of separator plates (45,35). The separator plates (45,35) are typically made from steel. In one configuration, the separator plates (45,35) are connected to the clutch pack input (42,32) and the friction plates (47,37) are connected to the clutch pack output (44,34). When the clutch pack (40,30) is disengaged (default, or no activation, disengaged) no (or only limited) torque nor speed is transferred from the clutch pack input (42,32) to the clutch pack output (44,34). The limited torque is typically 'drag torque' e.g. because of visco-hydraulic coupling between the friction plates (47,37) and separator plates (45,35). When the clutch pack (40,30) is activated slipping torque and speed are transferred from the clutch pack input (42,32) to the clutch pack output (44,34) depending on the degree of slipping. The degree of slipping is determined by the torque capacity set by the clutch pack and by the torque requirement of the vehicle. As is well understood in the art, typically an activated clutch pack will slip upon start-off because initial torque requirement of a stationary car exceeds the torque capacity of the clutch pack.

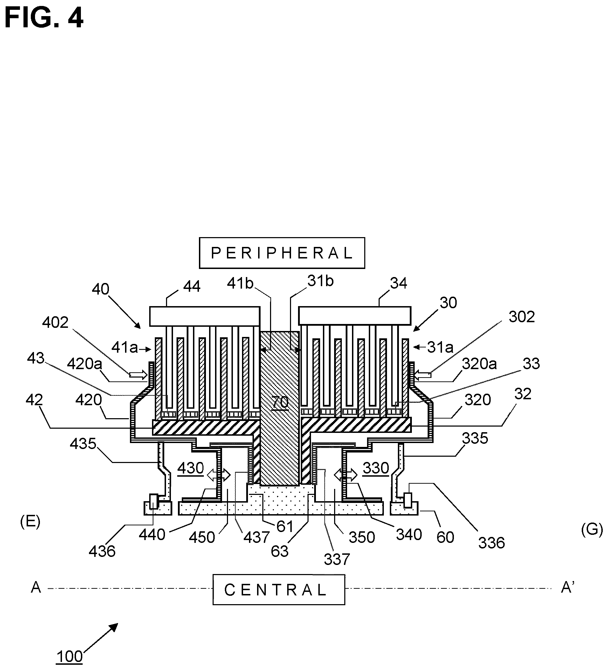

One or more (*e.g.* a plurality of) springs (43,33) **(****FIG. 4****)** (*e.g.* Belleville or disc spring, wave spring or other type) may be provided between the separator plates (45,35) biased to maintain the respective plates spaced apart to reduce drag torque. Preferably, one spring is disposed between each pair separator plates (45,35). These one or more springs (43,33) also exert the force to open (disengage) the clutch *i.e.* push the clutch pack piston (420,320) back when pressure is lowered. The one or more springs (420,320) bias clutch pack output (44,34) in a disengaged state. These one or more springs (43,33) are each disposed at or towards a central end of each separator plate (45,35), more in particular, at or towards a central end of a gap between pairs of separator plates (45,35).

The clutch packs (40,30) are normally open *i.e.* clutch packs (40,30) are biased in a disengaged state.

At least the
ES clutch pack (40) friction plates (47) and separator plates (45) (size, shape, spacing) and
GS clutch pack (30) friction plates (37) and separator plates (35) (size, shape, spacing)
may have mirrored symmetric identity across a mirror plane perpendicular to its axis of rotation of the ES clutch pack (40) and GS clutch pack (30). One or more other components of the clutch such as the one or more springs (size, shape, spacing) may also have mirrored symmetry within the clutch unit.

By providing the mirrored symmetry, controllability of each clutch pack becomes simplified because performance profiles of both clutch packs are the same. Determining a performance profile of a clutch (*e.g.* by simulations and/or by a testing rig) is costly and time consuming, while employing the mirrored symmetry allows the performance profile to be determined for only one clutch of the mirrored-identical pair, thereby reducing complexity, time and costs.

The clutch packs (40,30) are disposed in a parallel arrangement. By parallel arrangement, as understood in the art, it is meant that the engine (E) side clutch pack (40) and the gearbox (G) side clutch pack (30) are mutually axially spaced apart. Axes of rotation (A-A') of both clutch packs (40,30) are co-axial.

The ES clutch pack (40) has an ES clutch pack input (42) and an ES clutch pack output (44). The GS clutch pack (30) has an GS clutch pack input (32) and an GS clutch pack output (34).

Each clutch pack output (44,34) typically comprises a longitudinal annular ring body on which the friction plates (47,37) are attached; they are attached so as to protrude from an outer curved surface of the longitudinal annular ring body. They are attached rotationally fixed to the longitudinal annular ring body *e.g.* by a spline connection. The longitudinal annular ring body of GS clutch pack output (34) may be comprise in a GS clutch unit output drum (48) (drum (48) formed as one piece) as mentioned else where herein.

Each clutch pack input (42,32) typically comprises a longitudinal annular ring body on which the separator plates (45,35) are attached; they are attached so as to protrude from an outer curved surface of the longitudinal annular ring body. They are attached rotationally fixed to the longitudinal annular ring body *e.g.* by a spline connection.

The ES clutch pack (40) first end (41a) is an axial end ((E) end) of the ES clutch pack (40) configured to receive activation force from an ES clutch pack (40) piston (420).

The GS clutch pack (30) first end (31a) is an axial end ((G) end) of the GS clutch pack (30) configured to receive activation force from an GS clutch pack piston (320).

The ES clutch pack (40) second end (41b) is an axial end ((G) end) of the ES clutch pack (40), opposed to the ES clutch pack (40) first end (41a), configured to abut with the common clutch reaction plate (70) (see elsewhere herein).

The GS clutch pack (30) second end (31b) is an axial end ((E) end) of the GS clutch pack (30), opposed to the GS clutch pack (30) first end (31a), configured to abut with the common clutch reaction plate (70) (see elsewhere herein).

Each clutch pack input (42, 32) is central of the clutch pack output (44, 34) such that torque is transmitted across each activated clutch pack (40, 30) in a central to peripheral direction. More in particular, torque is transmitted in the activated clutch pack (40, 30) from clutch pack input (42, 32) to the clutch pack output (44, 34) in a central to peripheral direction.

Each clutch pack (40, 30) is configured such that torque from the clutch input shaft (60) is transmitted from the clutch pack input (42, 32) to the respective clutch pack output (44, 34) responsive to an activation of the respective clutch pack (40, 30). The activation is by an application of force to a clutch pack (40, 30) from a clutch pack piston (420, 320) in an axial direction (402, 302) towards the common clutch reaction plate (70). The activation is by an application of force from a clutch pack piston (420, 320) in an axial direction (402, 302) to a 1^{st} end (41a, 31a) of a clutch pack (40,32). Activation causes a clutch pack (40, 30) to engage or to slip. By default, a clutch pack (40, 30) is disengaged.

The double clutch unit (100) further comprises a clutch input shaft (60) (also known as input shaft (60)). The clutch input shaft (60) is configured to receive and carry torque from a source of torque such as an internal combustion engine (ICE), flywheel, or electric machine (EM) to one or both friction clutch pack (30,40). The clutch input shaft (60) extends from an (E) side of the double clutch unit (100) towards a (G) side of the double clutch unit. The clutch input shaft (60) is disposed central of and axially overlapping / coinciding with both ES clutch pack (40) and GS clutch pack (30). In particular an axial projection of the double clutch unit (100) shows the clutch input shaft (60) is disposed central of the ES clutch pack (40) and GS clutch pack (30). The clutch input shaft (60) has a (longitudinal) body (62).

The double clutch unit (100) may further comprise an axial liquid distributor (90), ALD (90), configured for transport of at least one liquid in an axial direction between the (E) side of the clutch input shaft and a location towards the (G) side of the clutch input shaft (60). The ALD (90) comprises a plurality of axial liquid distributor, ALD conduits (24, 24c, 24d), each for the transport of liquid in an axial direction **(****FIGs. 8A, 8B****,** **9A, 9B****).**

A first ALD conduit (24c) of the plurality of ALD conduits services both an ES clutch pack piston balancing chamber (450) and one or more GS cooling channels (74c) for providing cooling liquid to the GS clutch pack (30).

A second ALD (24d) of the plurality of ALD conduits, different from the first ALD conduit (24c), services both a GS clutch pack piston balancing chamber (350) and one or more ES cooling channels (74d) for providing cooling liquid to the ES clutch pack (40);

The plurality of axial liquid distributor, ALD conduits (24, 24c, 24d), are disposed central of the ES clutch pack piston balancing chamber (450) and of the GS clutch pack piston balancing chamber (350) when viewed in on an axial projection of the double clutch unit (100).

According to one aspect, provided is a double clutch unit (100) for a transmission comprising:
- an engine (E) side friction clutch pack, ES clutch pack (40), and a gearbox (G) side friction clutch pack, GS clutch pack (30);
- a clutch input shaft (60) having an axis (A-A') of rotation;
- an axial liquid distributor (90), ALD (90), configured for transport of at least one liquid in an axial direction between the (E) side of the clutch input shaft and a location towards the (G) side of the clutch input shaft (60),
wherein:
- each clutch pack (40,30) has a clutch pack input (42, 32) and clutch pack output (44, 34);
- the clutch packs (40,30) are disposed in a parallel arrangement axially flanking a common clutch reaction plate (70);
- each clutch pack input (42, 32) is central of the clutch pack output (44, 34) such that torque is transmitted across each activated clutch pack (40, 30) in a central to peripheral direction;
- the ALD (90) comprises a plurality of axial liquid distributor, ALD conduits (24, 24c, 24d), each for the transport of liquid in an axial direction;
- a first ALD conduit (24c) of the plurality of ALD conduits services both an ES clutch pack piston balancing chamber (450) and one or more GS cooling channels (74c) for providing cooling liquid to the GS clutch pack (30);
- a second ALD (24d) of the plurality of ALD conduits, different from the first ALD conduit (24c), services both a GS clutch pack piston balancing chamber (350) and one or more ES cooling channels (74d) for providing cooling liquid to the ES clutch pack (40);
- the plurality of axial liquid distributor, ALD conduits (24, 24c, 24d), are disposed central of the ES clutch pack piston balancing chamber (450) and of the GS clutch pack piston balancing chamber (350) when viewed in on an axial projection of the double clutch unit (100).

The effect of the separate G-side or E-side clutch first and second ALD conduits (24c, 64c, 84c; 24d, 64d, 84d), for example, of G-side or E-side clutch first and second CIS conduits (24c, 64c; 24d, 64d), or of G-side or E-side clutch first and second stator conduits (24c, 84c; 24d,84d) is an increase in axial compactness.

With the claimed configuration, cooling liquid can be provided only to the clutch pack (30, 40) in need of cooling, for instance, the one undergoing slippage; most heat is generated by the clutch pack during slippage. In other words, cooling liquid can be selectively provided either to the GS or ES clutch pack - which ever clutch pack requires it. Since the pump supplying cooling fluid has a limited upper flow rate, an ability to switch flow of cooling liquid only to the GS clutch pack (40) or to the ES clutch pack (30) means the maximum flow capacity of the pump can be directed only to the clutch pack in need of cooling.

In a typical arrangement of the prior art cooling liquid is supplied simultaneously to both the G-side clutch pack and the E-side clutch pack by a passive splitting of the flow, usually within the common clutch reaction plate (70). Since the situation will not arise where both clutch packs (30, 40) are simultaneously slipping, not supplying cooling liquid simultaneously to both G-side and E-side clutch pack will have no or little influence on performance or lifespan.

As a result of being able to direct a full cooling capacity only to the clutch pack (30, 40) in need of cooling, each clutch pack can be reduced in axial size e.g. less plates. Although the reducing the axial size will increase frictional heating because there is less surface area for transfer of torque and also for heat distribution, the additional heat created can be removed because of the capacity for cooling is increased by the provision separate cooling channels. Where axial compactness not an aim, clutch packs having the same axial length and implementing separate G-side and E-side cooling channels will have a longer lifespan compared with those that are served by a common channel because of the lower thermal loading.

An advantage of cross-feeds,
*i.e.* a first ALD conduit (24c) servicing both the ES balancing chamber (450) and GS cooling channels (74c) and a second ALD conduit (24d) servicing both the GS balancing chamber (350) and ES cooling channels (74d),
   compared with same-side feed,
*i.e.* a first ALD conduit servicing both the ES balancing chamber and ES cooling channels, and a second ALD conduit servicing both the GS balancing chamber and GS cooling channels,
is that additional cooling liquid can provided to/from a balancing chamber (350, 450), with little detrimental effect on the clutch pack (40,30) it is crossed with. Conversely, with same-side feed, an effect of additional addition cooling liquid on the same-side clutch pack can be detrimental.

For instance, as one clutch pack (*e.g.* ES clutch pack (40)) is being closed (*i.e.* a transition from open to closed) there is an excess of liquid in the ES balancing chamber (450) of ES clutch pack (40). Because they are served by the same first ALD conduit (24c) in the cross-feed configuration, the excess liquid will flow from the ES balancing chamber (450), *via* the common conduit (24c), into the one or more GS cooling channels (74c) to the GS clutch pack (30). The excess liquid flow has little or no impact on the GS clutch pack (30), because this clutch is typically not transitioning (opening or closing) at the same time.

Conversely, as one clutch pack (*e.g.* ES clutch pack (40)) is being opened *(i.e.* a transition from closed to open), there is a need to supply additional liquid to the ES balancing chamber (450) of the ES clutch pack (40) to rapidly replenish it in order to prevent closure of the GS clutch pack (30) by centrifugal force. This rapid replenishment is important for safety reasons to avoid unintentional closing of the clutch, which could happen at high speeds when the balancing room is not completely filled. Because they are served by same first ALD conduit (24c) in the cross-feed configuration, the additional cooling liquid will flow into the ES balancing chamber (450) but also into the one or more GS cooling channels (74c). The additional liquid flow into the one or more GS cooling channels (74c) has little or no impact on the GS clutch pack (30), because this clutch is typically not transitioning (opening or closing) at the same time, or a transitioning can be anticipated (and delayed) by a clutch control system. Compared with the same-side feed, the excess liquid flow flowing to the ES clutch pack (40) has a large impact because the increased cooling flow of the ES clutch pack will increase the drag torque in the open ES clutch pack (40) to a level higher than desired, in particular for a typical synchro gear shift that has to be carried out as soon as possible after opening the clutch; the presence of additional drag torque caused by the additional liquid flow in the same-side feed means that the synchro gear shift is delayed.

Use of the first ALD conduit (24c) (*e.g.* first CIS conduit (64c) or first stator conduit (84c)) and the second ALD conduit (24d) (*e.g.* second CIS conduit (64d) or second stator conduit (84d)) to separately service both the (ES or GS) balancing chamber (450, 350) and the (GS or ES) friction clutch pack (30, 40) reduces quantity of conduits in the clutch input shaft (60) or stator (80). The flow of cooling liquid to only one (*e.g.* ES) friction clutch pack (40) will also cause a flow of liquid also to the other (*e.g.* GS) balancing chamber (350) and any movement of the associated piston part (*e.g.* GS clutch pack piston (320)) in an E-direction (to open the clutch) induced by the increased in hydraulic pressure in the GS balancing chamber (350). However, this clutch opening movement has little or no effect because the GS friction clutch pack (30) is not activated while the ES friction clutch pack (40) is activated. Because only one first ALD conduit (24c) services both an ES balancing chamber (450) and a GS friction clutch pack (30) cooling, and only one second ALD conduit (24d) services a GS balancing chamber (350) and a ES friction clutch pack (40) cooling, a quantity of conduits is reduced, from 4 to 2, thereby reducing radial size.

The double clutch unit (100) preferably comprises common clutch reaction plate (70) axially and rotationally may be fixed by one or more welded joints to the clutch input shaft (60).

The common clutch reaction plate (70) is disposed axially between the ES clutch pack (40) and the GS clutch pack (30). The clutch packs (40,30) are disposed axially flanking the common clutch reaction plate (70). The common clutch reaction plate (70) is configured to receive reaction force(s) caused by activation, separately or simultaneously, of both clutch packs (30, 40). The common clutch reaction plate (70) is an end stop for both clutch packs (40,30) separately or simultaneously. The end stop receives axial forces applied by the clutch pack piston (420, 320) separately or simultaneously to compress clutch pack (40,30) separately or simultaneously to engage or slip the clutch. The common clutch reaction plate (70) may be considered to act as a (last) separator plate (47, 37) for each clutch pack (40,30).

The double clutch unit (100) further comprises an ES clutch unit drive plate (46) configured for transmission of torque from the clutch input shaft (60) to the ES clutch pack input (42). The ES clutch unit drive plate (46) may be rotationally and axially fixed by one or more welded joints (46a) to the clutch input shaft (60) .

The ES clutch unit drive plate (46) is rotationally and axially fixed to a portion of the ES clutch pack input (42) that is located on the (G) side of the ES clutch pack input (42). In particular, ES clutch unit drive plate (46) is rotationally and axially fixed to a portion of the ES clutch pack input (42) that is located at an end or edge of the ES clutch pack input (42) on the (G) side of the ES clutch pack input (42). ES clutch unit drive plate (46) and ES clutch pack input (42) maybe a monoblock (formed from one piece), or may be formed from two or more pieces mutually attached by one or more welded joints.

The ES clutch unit drive plate (46) is disposed only central of the ES clutch pack input (42).

The ES clutch unit drive plate (46) is a structure extending between the ES clutch pack input (42) and the clutch input shaft (60).

The ES clutch unit drive plate (46) typically has an annular structure with an inner circumference and an outer circumference. Torque is transmitted via the drive plate (46) to parts of the double clutch unit (100) that are concentrically arranged and radially distant. The inner circumference of the ES clutch unit drive plate (46) may be attached to the clutch input shaft (60) by the one or more welded joints. The outer circumference of the ES clutch unit drive plate is attached to the ES clutch pack input (42) by virtue of forming the ES clutch unit drive plate (46) and ES clutch pack input (42) as a monoblock (formed from one piece), or by one or more welded joints. The ES clutch unit drive plate may or may not be flat. The ES clutch unit drive plate is preferably substantially flat. It may be a continuous or discontinuous circle.

The GS clutch unit drive plate (36) is configured for transmission of torque from the clutch input shaft (60) to the GS clutch pack input (32). The GS clutch unit drive plate (36) may be rotationally and axially fixed by one or more welded joints (36a) to the clutch input shaft (60) .

The GS clutch unit drive plate (36) is rotationally and axially fixed to a portion of the GS clutch pack input (32) that is located on the (E) side of the GS clutch pack input (32). In particular, GS clutch unit drive plate (36) is rotationally and axially fixed to a portion of the GS clutch pack input (32) that is located at an end or edge of the GS clutch pack input (32) on the (E) side of the GS clutch pack input (32). GS clutch unit drive plate (36) and GS clutch pack input (32) may be a monoblock (formed from one piece), or may be formed from two or more pieces mutually attached by one or more welded joints.

The GS clutch unit drive plate (36) is disposed only central of the GS clutch pack input (32).

The GS clutch unit drive plate (36) is a structure extending between the GS clutch pack input (32) and the clutch input shaft (60).

The GS clutch unit drive plate (36) typically has an annular structure with an inner circumference and an outer circumference. Torque is transmitted via the GS clutch unit drive plate (36) to parts of the double clutch unit (100) that are concentrically arranged and radially distant. The inner circumference of the GS clutch unit drive plate (36) may be attached to the clutch input shaft (60) by the one or more welded joints. The outer circumference of the GS clutch unit drive plate is attached to the GS clutch pack input (32) by virtue of forming the GS clutch unit drive plate (36) and ES clutch pack input (32) as a monoblock (formed from one piece), or by one or more welded joints. The GS clutch unit drive plate (36) may or may not be flat. The GS clutch unit drive plate is preferably substantially flat. It may be a continuous or discontinuous circle.

The ES clutch unit drive plate (46) and the GS clutch unit drive plate (36) are preferably arranged axially flanking the common clutch reaction plate (70).

The ES clutch unit drive plate (46) and the GS clutch unit drive plate (36) axially flanking the common clutch reaction plate (70) may both contact the common clutch reaction plate (70).

The ES clutch unit drive plate (46) and the GS clutch unit drive plate (36) axially flanking the common clutch reaction plate (70) means the ES clutch unit drive plate (46) and the GS clutch unit drive plate (36) are both next to or adjacent to the common clutch reaction plate (70).

The ES clutch unit drive plate (46) and the GS clutch unit drive plate (36) axially flanking the common clutch reaction plate (70) means no axially intervening clutch components are present between the ES clutch unit drive plate (46) and the common clutch reaction plate (70) or between the GS clutch unit drive plate (36) and the common clutch reaction plate (70) such as a piston assembly.

According to one aspect, provided is a double clutch unit (100) for a transmission comprising:
- an engine (E) side friction clutch pack, ES clutch pack (40), and a gearbox (G) side friction clutch pack, GS clutch pack (30);
- a clutch input shaft (60);
wherein:
- each clutch pack (40,30) has a clutch pack input (42, 32) and clutch pack output (44, 34);
- the clutch packs (40,30) are disposed in a parallel arrangement axially flanking a common clutch reaction plate (70);
- each clutch pack input (42, 32) is central of the clutch pack output (44, 34) such that torque is transmitted across each activated clutch pack (40, 30) in a central to peripheral direction;
- torque from the clutch input shaft (60) is transmitted to each clutch pack input (42, 32) via a pair of drive plates (46, 36 ), one for each clutch pack input (42, 32);
- each drive plate (46, 36 ) is axially and rotationally fixed by one or more welded joints (46a, 36a) to the clutch input shaft (60);
- the pair of drive plates (46, 36 ) is arranged axially flanking (adjacent to) the common clutch reaction plate (70).

Welded joint attachment (46a, 36a) between the each of the ES clutch unit drive plate (46) and the GS clutch unit drive plate (36) and the clutch input shaft (60) allows for transmission of higher torque compared with spline connection occupying the same axial space. A spline connection requires more axial length compared with a weld that achieves the same upper torque load limit.

Disposing the ES clutch unit drive plate (46) and the GS clutch unit drive plate (36) axially flanking the common clutch reaction plate (70) allows a robust welded joint while still allowing disassembly/assembly of the double clutch unit (100) *e.g.* during manufacture or servicing. Because the welds (46a, 36a) are positioned axially flanking the common clutch reaction plate (70) at an extreme end stop of desired sliding motion - other parts of the clutch *e.g.* pistons, plates, can travel freely during assembly/disassembly without hinderance of an intervening welded part. The arrangement allows shim discs to be inserted or changed at any time during assembly or during service to adjust spacing between the piston parts so optimizing clutch operation. It also allows a clutch to be recycled, thereby reducing impact on the environment.

In addition, the robustness of the one or more welded joints allows clutch reaction forces from both clutches can be captured by the respective ES clutch unit drive plate (46) and the GS clutch unit drive plate (36), in addition to the common clutch reaction plate (70). This allows application of stronger compression forces to the clutch packs without increasing axial length.

Because each clutch pack input (42, 32) is central of the clutch pack output (44, 34), torque may be transferred directly (*i.e.* central to peripheral direction only) from the clutch input shaft (60) to the clutch pack input (42, 32). The inverse arrangement would require a drive drum to transfer torque from the clutch input shaft (60). Because a drive drum is avoided, and instead a ES clutch unit drive plate (46) and a GS clutch unit drive plate (36) employed which occupy space between the clutch pack input (42, 32) and clutch input shaft (60), the radial compactness of the double clutch unit is improved. In addition, the clutch pack inputs (42, 32), which are always rotating, are closer to outlets of cooling and/or lubrication liquid when the clutch pack input (42, 32) is central of the clutch pack output (44, 34); rotation of the clutch pack inputs (42, 32) distribute cooling/lubrication liquid to more peripheral parts of the clutch packs by centrifugal action even when the clutch is disengaged. By contrast, distribution of cooling in an inverse configuration (clutch pack output (44, 34) central of the clutch pack input (42, 32)) would be reduced when the clutch is disengaged because the stationary pack output (44, 34) would not provide centrifugal action.

The double clutch unit (100) preferably further comprises the axial liquid distributor (90) configured for transport of at least one liquid (*e.g.* hydraulic activation liquid (for activation of the one or both clutch packs), hydraulic balancing liquid (for balancing a piston of one or both clutch packs), lubrication liquid, cooling liquid), in an axial direction between the (E) side of the clutch input shaft and a location towards the (G) side of the clutch input shaft (60). The liquid may travel in an axial direction from the (E) side of the clutch input shaft to towards the (G) side of the clutch input shaft (60) (*e.g.* for application of hydraulic pressure, for cooling or lubrication). The liquid may travel in an axial direction from a (G) side of the clutch input shaft to the (E) side of the clutch input shaft (60) (*e.g.* when hydraulic pressure is released).

The axial liquid distributor (90) is disposed central of the ES clutch pack piston balancing chamber (450) and of the GS clutch pack piston balancing chamber (350). In particular an axial projection of the double clutch unit (100) shows the axial liquid distributor (90) is disposed central of the ES clutch pack piston balancing chamber (450) and of the GS clutch pack piston balancing chamber (350).

The liquid is provided to or from an interior (102) of the clutch unit; the interior (102) of the clutch unit (100) refers to a space between components of the clutch unit (100) or to one or more specific components (*e.g.* pressure chamber (430, 330), balancing chamber (450, 350), clutch pack (30, 40) of the clutch unit (100). The clutch unit interior (102) may be defined peripherally and at the (G) side by the outermost output drum (48), and at the (E) side by the end of the ES clutch pack (40). Where the housing is present, clutch unit interior (102) may be defined by an interior of a body of the housing.

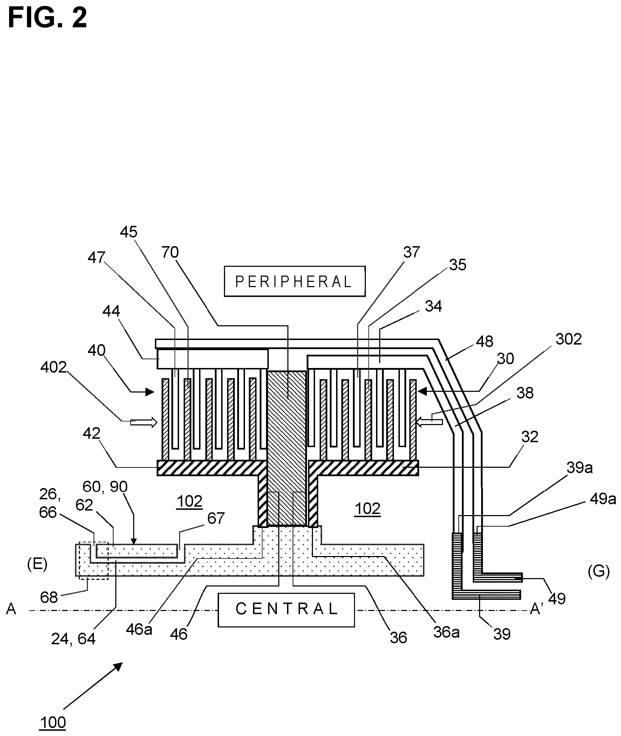

The axial liquid distributor (90) may be comprised within a body (62) of the clutch input shaft (60) (see for example, **FIGs. 2****,** **5** **&** **5A****,** **6****, 8 Panel A & B** and **10****).** Alternatively, the axial liquid distributor (90) may be comprised within a body (82) of a stator (80) disposed within an annular groove or axial bore of the clutch input shaft (60) (see for example, **FIGs. 3** and 7 **&** **7A****, 9 Panel A & B** and **11****).**

The axial liquid distributor (90), ALD (90), comprises at least one (preferably a plurality of) axial liquid distributor, ALD conduits (24, 24c, 24d) for a transport of the liquid from an access location at an (E) side of the axial liquid distributor (90) and one or more axially remote locations spaced axially distant from the access locations towards the (G) side of the axial liquid distributor (90).

Where there is a plurality of ALD conduits (24, 24c, 24d) each ALD conduit (24, 24c, 24d) may conduct a different liquid and/or transport the liquid to a different axial location of the axial liquid distributor (90).

Each ALD conduit (24, 24c, 24d) has at one end in an ALD access port (26, 26c, 26d) connecting the ALD conduit to a surface of the body (62) of the clutch input shaft (60) or body (82) of the stator (80); the ALD access port (26, 26c, 26d, 66, 66c, 66d, 86, 86c, 86d) provides access to the ALD conduit (24, 24c, 24d) axially outside the clutch unit interior (102). The ALD access port (26, 26c, 26d, 66, 66c, 66d, 86, 86c, 86d) is preferably disposed at an (E) side of the axial liquid distributor (90).The ALD access port (26, 26c, 26d) may be disposed radially *i.e.* on a peripheral surface (*e.g.* **FIGs. 2****,** **3****,** **8A, 8B****)** or axially *i.e.* on an axial end (e.g. **FIGs. 9A, 9B****).**

Each ALD conduit (24, 24c, 24d) of the body (62) of the clutch input shaft (60) or body (82) of the stator (80) is disposed with at least one ALD remote port (27ci, 27cii, 27di, 27dii) connecting the ALD conduit (24c, 24d) to the surface of the body (62) of the clutch input shaft (60) or body (82) of the stator (80). The ALD remote port (27ci, 27cii, 27di, 27dii) is spaced axially distant from the ALD access port (26, 26c, 26d) and towards the (G) side of the clutch input shaft (60). The at least one ALD remote port (27ci, 27cii, 27di, 27dii) allows passage of the liquid from the ALD conduit (24c, 24d) to the clutch unit interior (102) or from the clutch unit interior (102) to the ALD conduit (24c, 24d).

According one aspect a first ALD conduit (24c) services both the ES clutch pack balancing chamber (450), and also services one or more GS cooling channels (74c) for providing cooling liquid to the GS clutch pack (30). **FIG. 8** **Panel** A illustrates an example of a clutch input shaft (60) body (62) provided with a first ALD conduit (24c) servicing both the ES balancing chamber (450) and a GS cooling channel (74c) for providing cooling liquid to the GS clutch pack (30). **FIG. 9** **Panel** A illustrates an example of a stator (60) body (82) provided with a first ALD conduit (24c) servicing both the ES balancing chamber (450) and a GS cooling channel (74c) for providing cooling liquid to the GS clutch pack (30).

It is noted in some embodiments that the cooling liquid is also used for hydraulic balancing. Accordingly the cooling liquid may also be utilized as a hydraulic balancing liquid. Accordingly the cooling liquid may be known as a hydraulic balancing liquid.

According to one aspect an ALD remote port (27ci) of a first ALD conduit (24c), ALD-1stC-ES remote port (27ci), services the ES clutch pack balancing chamber (450), and the another ALD remote port (27cii) of the first ALD conduit (24c), ALD-1stC-GS remote port (27cii), services one or more GS cooling channels (74c) for providing cooling liquid to the GS clutch pack (30). This is illustrated exemplarity in **FIGs. 8** **Panel A** and **9 Panel A.**

The cooling liquid provided to both the ES clutch pack balancing chamber (450) and to the one or more GS cooling channels (74c) is provided at a low pressure. It may also be known as low pressure liquid. By low pressure it is meant pressure at a level insufficient to counter activation of the GS clutch pack (30) by the GS clutch pack piston (420). The cooling liquid provides cooling to the GS clutch pack (30) and also acts as hydraulic balancing liquid for the ES clutch pack balancing chamber (450). In this context, the cooling liquid is synonymous with the hydraulic balancing liquid as mentioned elsewhere herein. In this context, the cooling liquid and the hydraulic balancing liquid are one and the same liquid.

Both the ALD-1stC-ES remote port (27ci) and the ALD-1stC-GS remote port (27cii) are connected to only one conduit of the ALD, the first ALD conduit (24c). In particular, the ALD-1stC-GS remote port (27cii) opens into a (radial) GS cooling channel (74c) of the common clutch reaction plate (70) which opens (axially) into a gap (not shown) central of the GS clutch input (32). The GS clutch input (32) is provided with holes or slots (not shown) that allow the cooling liquid to moving though the GS clutch plates (34, 37) for cooling of the GS clutch pack (30) under centrifugal force. This is illustrated exemplarity in **FIGs. 8** **Panel A** and **9 Panel A.**

According one aspect a second ALD conduit (24d) services both the GS clutch pack balancing chamber (350), and also services one or more ES cooling channels (74d) for providing cooling liquid to the GS clutch pack (40). **FIG. 8** **Panel B** illustrates an example of a clutch input shaft (60) body (62) provided with a second ALD conduit (64d) servicing both the GS balancing chamber (350) and an ES cooling channel (74d) for providing cooling liquid to the ES clutch pack (40). **FIG. 9** **Panel B** illustrates an example of a stator (80) body (82) provided with a second ALD conduit (24d) servicing both the GS balancing chamber (350) and an ES cooling channel (74d) for providing cooling liquid to the ES clutch pack (40).

According to one aspect an ALD remote port (27di) of a second ALD conduit (24d), ALD-2ndC-GS remote port (27di), services the GS clutch pack balancing chamber (350) and another ALD remote port (27dii) of the second ALD conduit (24d), ALD-2ndC-ES remote port (27dii), services one or more ES cooling channels (74d) for providing cooling liquid to the ES clutch pack (40).

In particular, the ALD-2ndC-ES remote port (27dii) opens into an (radial) ES cooling channel (74d) of the common clutch reaction plate (70) which opens (axially) into a gap (not shown) central of the ES clutch input (42). The ES clutch input (42) is provided with holes or slots (not shown) that allow the cooling liquid to moving though the clutch plates (44, 47) for cooling of the ES clutch pack (40) under centrifugal force.

The cooling liquid provided to both the GS clutch pack balancing chamber (350) and to the one or more ES cooling channels (74d) is provided at a low pressure It may also be known as low pressure liquid. By low pressure it is meant pressure at a level insufficient to counter activation of the ES clutch pack (40) by the ES clutch pack piston (320). The cooling liquid provides cooling to the ES clutch pack (40) and also acts as hydraulic balancing liquid for the GS clutch pack balancing chamber (350). In this context, the cooling liquid is synonymous with the hydraulic balancing liquid as mentioned elsewhere herein. In this context, the cooling liquid and the hydraulic balancing liquid are one and the same liquid

Both the ALD-2ndC-GS remote port (27di) and ALD-2ndC-ES remote port (27dii) are preferably connected to only one conduit of the ALD, the second ALD conduit (24d).

The first ALD conduit (64c) and the second ALD conduit (64d) are separate within the clutch input shaft (60) body (62) or stator (80) body (82). The first ALD conduit (24c) and the second ALD conduit (24d) are different. The cooling liquid (that also acts as hydraulic balancing liquid) may be provided to each conduit (24c, 24d) individually or independently. Pressure of the cooling liquid to each conduit (64c, 64d) is independently controllable.

The ES cooling channel (74d) is separate from the GS cooling channel (74c). The ES cooling channel (74d) and the GS cooling channel (74c) are mutually different. The low pressure liquid may be provided to each cooling channel individually or independently. Pressure of cooling liquid (that also acts as hydraulic balancing liquid) to each ALD conduit (64c, 64d) is independently controllable.

As mentioned, the clutch input shaft (60), in particular a body (62) thereof, may comprise the axial liquid distributor (90). The plurality of ALD conduits (24, 64; 24c, 64c; 24d, 64d) may be disposed within a body (62) of the clutch input shaft (60). The ALD conduit (24c, 24d) disposed in a body (62) of the clutch input shaft (60) is known as a clutch input shaft (60), CIS, conduit (64c, 64d).

The ALD conduit (24) disposed in a body (62) of the clutch input shaft (60) is known as CIS conduit (64). As mentioned, the clutch input shaft (60), in particular a body (62) thereof, may comprise the axial liquid distributor (90), meaning that it typically comprises at least one (preferably a plurality of) clutch input shaft (60), CIS, conduit (64) for a transport of the liquid from an access location at an (E) side of the clutch input shaft (60) and one or more axially remote locations spaced axially distant from the access locations towards the (G) side of the clutch input shaft (60).

Where there is a plurality of CIS conduits (64, 64c, 64d) within the body (62) of the clutch input shaft (60), each conduit may conduct a different liquid and/or transport the liquid to a different axial location of the clutch input shaft (60).

Each CIS conduit (64, 64c, 64d) has at one end in an CIS access port (66, 66c, 66d) connecting the CIS conduit to a surface of the body (62) of the clutch input shaft (60); the CIS access port (66) provides access to the CIS conduit (64, 64c, 64d) axially outside the clutch unit interior (102). The CIS access port (66, 66c, 66d) is disposed at an (E) side of the clutch input shaft (60). The CIS access port (66, 66c, 66d) may be disposed radially *i.e.* on a peripheral surface *(e.g.* FIGs. 2, 8A, 8B) or axially *i.e.* on an axial end (not illustrated).

Each CIS conduit (64, 64c, 64d) on a surface of the body (62) is disposed with at least one CIS remote port (67, 67ci, 67di, 67cii, 67dii) connecting the CIS conduit (64) to the surface of the body (62) of the clutch input shaft (60). The CIS remote port (6767ci, 67di, 67cii, 67dii) is spaced axially distant from the CIS access port (66) and towards the (G) side of the clutch input shaft (60). The at least one CIS remote port (67, 67ci, 67di, 67cii, 67dii) allows passage of the liquid from the CIS conduit (64) to the clutch unit interior (102) or from the clutch unit interior (102) to the CIS conduit (64).

The first ALD conduit (24c) disposed in a body (62) of the clutch input shaft (60) as mentioned elsewhere herein is known as a first CIS conduit (64c). According one aspect a first CIS conduit (64c) services both the ES clutch pack balancing chamber (450), and also services one or more GS cooling channels (74c) for providing cooling liquid to the GS clutch pack (30). FIG. 8 Panel A illustrates an example of a clutch input shaft (60) body (62) provided with a first CIS conduit (64c) servicing both the ES balancing chamber (450) and a GS cooling channel (74c) for providing cooling liquid to the GS clutch pack (30).

The ALD-1stC-ES remote port (27ci) disposed in a body (62) of the clutch input shaft (60) as mentioned elsewhere herein is known as a CIS-1stC-ES remote port (67ci). The ALD-1stC-GS remote port (27cii) disposed in a body (62) of the clutch input shaft (60) as mentioned elsewhere herein is known as a CIS-1stC-GS remote port (67cii).

According to one aspect one CIS remote port (67ci) of a first CIS conduit (64c), a CIS-1stC-ES remote port (67ci), services the ES clutch pack balancing chamber (450), and another CIS remote port (67cii) of the first CIS conduit (64c), a CIS-1stC-GS remote port (67cii), services one or more GS cooling channels (74c) for providing cooling liquid to the GS clutch pack (30).

In particular, the CIS-1stC-GS remote port (67cii) opens into a GS cooling channel (74c) of the common clutch reaction plate (70) which opens into a gap (not shown) central of the GS clutch input (32). The GS clutch input (32) is provided with holes or slots (not shown) that allow the cooling liquid to moving though the GS clutch plates (34, 37) for cooling of the GS clutch pack (30) under centrifugal force.

Both the CIS-1stC-ES remote port (67ci) and the CIS-1stC-GS remote port (67cii) are preferably connected to only one conduit, the first CIS conduit (64c).

The second ALD conduit (24d) disposed in a body (62) of the clutch input shaft (60) as mentioned elsewhere herein is known as a second CIS conduit (64c). According one aspect a second CIS conduit (64d) services both the GS clutch pack balancing chamber

(350), and also services one or more ES cooling channels (74d) for providing cooling liquid to the GS clutch pack (40). **FIG. 8B** illustrates an example of a clutch input shaft (60) body (62) provided with a second CIS conduit (64d) servicing both the GS balancing chamber (350) and an ES cooling channel (74d) for providing cooling liquid to the ES clutch pack (40).

The ALD-2ndC-GS remote port (27di) disposed in a body (62) of the clutch input shaft (60) as mentioned elsewhere herein is known as a CIS-2ndC-GS remote port (67di). The ALD-2ndC-ES remote port (27dii) disposed in a body (62) of the clutch input shaft (60) as mentioned elsewhere herein is known as a CIS-2ndC-ES remote port (67dii).

According to one aspect one CIS remote port (67di) of a second CIS conduit (64d), CIS-2ndC-GS remote port (67di), services the GS clutch pack balancing chamber (350) and another CIS remote port (67dii) of the second CIS conduit (64d), CIS-2ndC-ES remote port (67dii), services one or more ES cooling channels (74d) for providing cooling liquid to the ES clutch pack (40).

In particular, the CIS-2ndC-ES remote port (67dii) opens into an ES cooling channel (74d) of the common clutch reaction plate (70) which opens into a gap (not shown) central of the ES clutch input (42). The ES clutch input (42) is provided holes or slots (not shown) that allow the cooling liquid to moving though the clutch plates (44, 47) for cooling of the ES clutch pack (40) under centrifugal force.

Both the CIS-2ndC-GS remote port (67di) and CIS-2ndC-ES remote port (67dii) are preferably connected to only one conduit, the second CIS conduit (64d).

The first CIS conduit (64c) and the second CIS conduit (64d) are separate within the clutch input shaft (60) or input shaft body (62). The first CIS conduit (64c) and the second CIS conduit (64d) are different. The cooling liquid (that also acts as hydraulic balancing liquid) may be provided to each conduit (64c, 64d) individually or independently. Pressure of the cooling liquid to each conduit (64c, 64d) is independently controllable.

The ES cooling channel is separate from the GS cooling channel. The ES cooling channel and the GS cooling channel are mutually different. The low pressure liquid may be provided to each cooling channel individually or independently. Pressure of cooling liquid (that also acts as hydraulic balancing liquid) to each CIS conduit (64c, 64d) is independently controllable.

As mentioned, the stator (80) may comprise the axial liquid distributor (90). In particular, the axial liquid distributor (90) may be comprised within a body of a stator (80) disposed at least partially within an annular groove or axial bore of the clutch input shaft (60). The stator (80) is a non-moving part of the double clutch. The stator (80) is longitudinal. The stator (80) remains static compared with other torque-transmitting parts of the clutch.

The clutch input shaft (60) may comprise a central section (60a) and a peripheral section (60b) both in fixed axial and rotational relation, wherein the annular groove is formed between the central section (60a) and the peripheral section (60b). The central section (60a) and a peripheral section (60b) may be joined by an annular ring; The annular ring may be integrated into (i.e. formed as one piece with) the central section (60a) or the peripheral section (60b). The stator (80) may have an annular body.

The clutch input shaft (60) may comprise a bore configured to receive the stator (80). The bore may be a blind-end bore. The stator (80) may have a tubular (cylindrical) body.

The ALD conduit (24) disposed in a body (82) of the stator (80) is known as stator conduit (84). The stator (80) body (82) may comprise the axial liquid distributor (90), meaning that it typically comprises at least one (preferably a plurality of) stator conduit (84, 84c, 84d) for a transport of the liquid from the (E) side of the stator (80) in an axial direction towards the (E) side of the stator (80). Where there is a plurality of conduits (84, 84c, 84d) within the body (82) of the stator (80), each conduit may conduct a different liquid and/or transport the liquid to a different axial location of the stator (80).

Each stator conduit (84, 84c, 84d) has at one end in a stator access port (86, 86c, 86d) connecting the stator conduit to a surface of the body (82) of the stator (80); the stator access port (86) provides access to the stator conduit (84, 84c, 84d) axially outside the clutch unit interior (102). The stator access port (86, 86c, 86d) is disposed at an (E) side of the stator (80). The stator access port (86, 86c, 86d) may be disposed radially *i.e.* on a peripheral surface (*e.g.* **FIG. 3****)** or axially *i.e.* on an axial end (*e.g.* **FIGs. 9A, 9B****).**

Each conduit (84, 84c, 84d) on a surface of the body (82) is disposed with at least one stator remote port (87, 87a to e, 87ci,87cii, 87di, 87dii) connecting the stator conduit (84) to the surface of the body (82) of the stator (80). The stator remote port (87, 87a to e, 87ci,87cii, 87di, 87dii) is spaced axially distant from the stator access port (86) and towards the (G) side of the stator (80). The at least one stator remote port (87, 87a to e, 87ci,87cii, 87di, 87dii) allows passage of the liquid from the stator conduit (84) to the clutch unit interior (102) or from the clutch unit interior (102) to the conduit (84).

For each stator remote port (87, 87a to e, 87ci,87cii, 87di, 87dii) disposed on the stator stator (80), the peripheral section (60b) of the clutch input shaft (60) is disposed with at least one aperture (69) axially aligned with the stator remote port (87, 87a to e) for passage of the liquid between the stator remote port (87, 87a to e) and clutch interior (102).

The first ALD conduit (64c) disposed in a body (82) of the stator (80) is known as a first stator conduit (84c). The second ALD conduit (64d) disposed in a body (82) of the stator (80) is known as a second stator conduit (84c). According one aspect a first stator conduit (84c) services both the ES clutch pack balancing chamber (450), and also services one or more GS cooling channels (74c) for providing cooling liquid to the GS clutch pack (30). **FIG. 9** **Panel A** illustrates an example of a stator (80) body (82) provided with a first stator conduit (84c) servicing both the ES balancing chamber (450) and a GS cooling channel (74c) for providing cooling liquid to the GS clutch pack (30).

The ALD-1stC-ES remote port (27ci) disposed in body (82) of the stator (80) as mentioned elsewhere herein is known as a stator-1stC-ES remote port (87ci). The ALD-1stC-GS remote port (27cii) disposed in a body (82) of the stator (80) as mentioned elsewhere herein is known as a stator-1stC-GS remote port (87cii).

According to one aspect one stator remote port (87ci) of a first stator conduit (84c), a stator-1stC-ES remote port (87ci) services the ES clutch pack balancing chamber (450), and another stator remote port (87cii) of the first stator conduit (84c), a stator-1stC-GS remote port (87cii), services one or more GS cooling channels (74c) for providing cooling liquid to the GS clutch pack (30).

The stator-1stC-ES remote port (87ci) axially aligns with one or more radial apertures in the clutch input shaft body (62) such that liquid can pass between the one or more GS cooling channels (74c) and the first stator conduit (84c) *via* the clutch input shaft body (62). The stator-1stC-GS remote port (87cii) axially aligns with one or more radial apertures in the clutch input shaft body (62) such that liquid can pass between the ES balancing chamber (450) and the first stator conduit (84c) *via* the clutch input shaft body (62).

In particular, the stator-1stC-GS remote port (87cii) services a GS cooling channel (74c) of the common clutch reaction plate (70) which opens into a gap (not shown) central of the GS clutch input (32). The GS clutch input (32) is provided with holes or slots (not shown) that allow the cooling liquid to moving though the GS clutch plates (34, 37) for cooling of the GS clutch pack (30) under centrifugal force.

Both the stator-1stC-ES remote port (87ci) and the stator-1stC-GS remote port (87cii) are preferably connected to only one conduit, the first stator conduit (84c).

The ALD-2ndC-GS remote port (27di) disposed in a body (82) of the stator (80) as mentioned elsewhere herein is known as a stator-2ndC-GS remote port (87di). The ALD-2ndC-ES remote port (27dii) disposed in a body (82) of the stator (80) as mentioned elsewhere herein is known as a stator-2ndC-ES remote port (87dii).

According one aspect a second stator conduit (84d) services both the GS clutch pack balancing chamber (350), and also services one or more ES cooling channels (74d) for providing cooling liquid to the GS clutch pack (40). **FIG. 9** **Panel B** illustrates an example of a stator (80) body (82) provided with a second stator conduit (84d) servicing both the GS balancing chamber (350) and an ES cooling channel (74d) for providing cooling liquid to the ES clutch pack (40).

One stator remote port (87di) of a second stator conduit (84d), stator-2ndC-GS remote port (87di), services the GS clutch pack balancing chamber (350) and another stator remote port (87dii) of the second stator conduit (84d), stator-2ndC-ES remote port (87dii), services one or more ES cooling channels (74d) for providing cooling liquid to the ES clutch pack (40).

The stator-2ndC-ES remote port (87di) axially aligns with one or more (radial) apertures in the clutch input shaft body (62) such that liquid can pass between the one or more ES cooling channels (74d) and the second stator conduit (84d) *via* the clutch input shaft body (62).

The stator-2ndC-GS remote port (87di) axially aligns with one or more (radial) apertures in the clutch input shaft body (62) such that liquid can pass between the GS balancing chamber (350) and the second stator conduit (84d) *via* the clutch input shaft body (62).

In particular, the stator-2ndC-ES remote port (87dii) services an ES cooling channel (74d) of the common clutch reaction plate (70) which opens into a gap (not shown) central of the ES clutch input (42). The ES clutch input (42) is provided holes or slots (not shown) that allow the cooling liquid to moving though the clutch plates (44, 47) for cooling of the ES clutch pack (40) under centrifugal force.

Both the stator-1stC-GS remote port (87di) and stator-2ndC-ES remote port (87dii) are preferably connected to only one conduit, the second stator conduit (84d).

The first stator conduit (84c) and the second stator conduit (84d) are separate within the stator (80) or stator body (82). The first stator conduit (84c) and the second stator conduit (84d) are different. The cooling liquid (that also acts as hydraulic balancing liquid) may be provided to each conduit (84c, 84d) individually or independently. Pressure of the cooling liquid to each conduit (84c, 84d) is independently controllable.

The ES cooling channel is separate from the GS cooling channel. The ES cooling channel and the GS cooling channel are mutually different. The low pressure liquid may be provided to each cooling channel individually or independently. Pressure of cooling liquid (that also acts as hydraulic balancing liquid) to each CIS conduit (64c, 64d) is independently controllable.

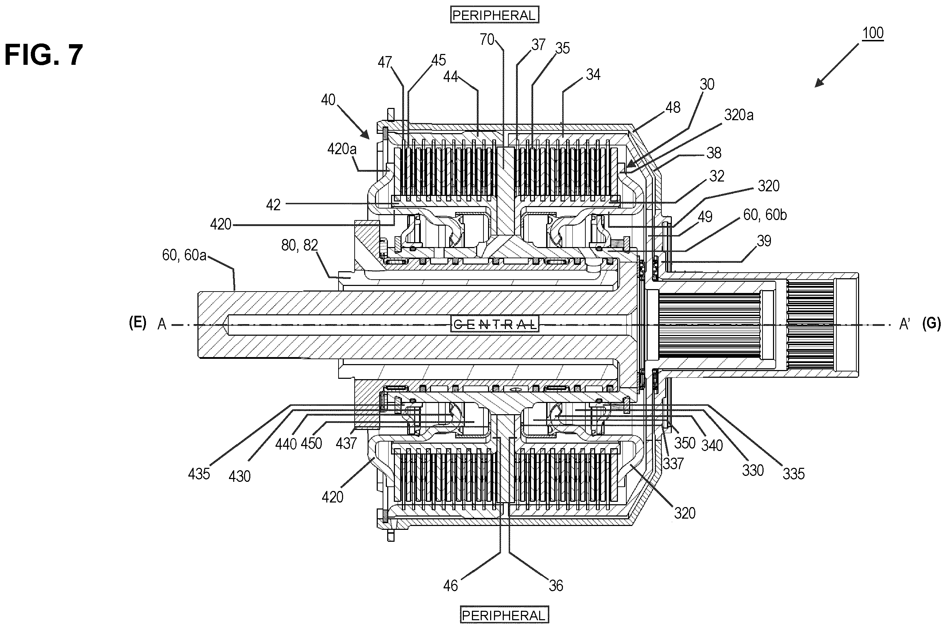

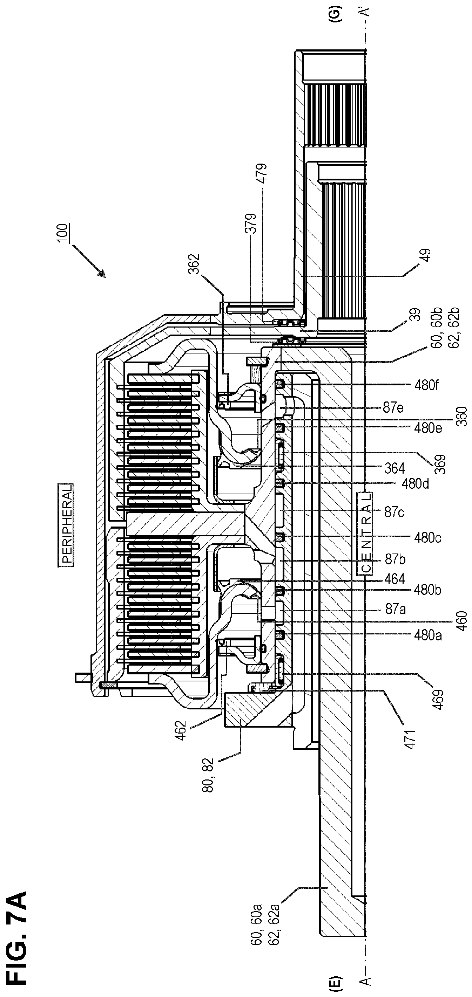

Each stator remote port (87,87a to e) may be flanked by a pair of annular seals. Exemplary annular seals (480a to f) are indicated separately in FIG. 7A for the double clutch unit of FIG. 7. For instance, stator remote port (87a) flanked by annular seals (480a and b); stator remote port (87b) flanked by annular seals (480b and c); stator remote port (87c) flanked by annular seals (480c and d); stator remote port (87d) flanked by annular seals (480d and e); stator remote port (87e) flanked by annular seals (480e and f). Each annular seal may be any type of annular seal, including but not limited to an O-ring, vulcanised or lip seal.

Each annular seal (480a to f) is disposed between the stator (80) and the input shaft (60). In particular, it is disposed between a body (82) of the stator (80) and a body (62b) of the input shaft peripheral annular section (62). Each annular seal (480a to f) is be attached to the stator (80). Each annular seal may be disposed in a groove.

Each pair of annular seals (480a and b; 480b and c; 480c and d; 480d and e; 480e and f) prevent or reduce axial leakage of liquid to or from the stator remote port (87a; 87b; 87c; 87d; 87e respectively) when the stator (80) is coupled with the input shaft (60), in particular when the body (82) of the stator (80) is coupled with the body (62b) of the input shaft peripheral annular section (62).

One or more radial bearings (469, 369) may be disposed between the stator (80) and the input shaft (60), in particular between the body (82) of the stator (80) and the body (62b) of the input shaft peripheral annular section (62). The one or more radial bearings (469, 369) radially supports rotation of the input shaft (60) relative to the stator (80). An exemplary configuration is shown in FIG. 7B.

The radial bearing (469, 369) may be disposed such that it acts concentrically between the input shaft (60) and the stator (80), in particular between body (62b) of the input shaft peripheral annular section (62) and the body (82) of the stator (80). The radial bearing (469, 369) also bears radial forces when the input shaft (60) rotates relative to the stator (80). The radial bearing may be a needle bearing. The radial bearing (469, 369) may be disposed at the engine side (E) and/or at the gearbox side (G) of the stator (80). Exemplary radial bearings (469, 369) are indicated separately in **FIG. 7A** for the double clutch unit of **FIG. 7****.**

A (first) thrust bearing (471) may be provided between the stator (80) and the input shaft (60), and to limit axial movement of the input shaft (60) relative to the stator (80) in the direction of the engine (E). The (first) thrust bearing (471) may be disposed at the engine side (E) of the stator (80). Exemplary (first) thrust bearing (471) is indicated separately in **FIG. 7A** for the double clutch unit of **FIG. 7****.**

The body (62) of the clutch input shaft (60) or the body (82) of the stator (80) may be disposed with one or more conduit(s) (64, 84) for conduction of hydraulic activation pressure (via hydraulic activation liquid) for activation of each clutch pack (40,30). The body (62, 82) may comprises at least remote port (67, 87) for passage of the hydraulic activation pressure (via hydraulic activation liquid) from the one or more conduit(s) (64, 84) to a piston assembly of a clutch pack, or *vice versa.* The aforementioned conduits are preferably different from the one or more conduits for conduction of hydraulic balancing pressure and/or one or more conduit for conduction of lubrication liquid, and/or one or more conduit for conduction of cooling liquid mentioned elsewhere herein.

The body (62) of the clutch input shaft (60) or the body (82) of the stator (80) may be disposed with one or more conduit(s) for conduction of hydraulic balancing pressure (via hydraulic balancing liquid) for activation of each clutch pack (40,30). The body (62, 82) may comprises at least one remote port for passage of the hydraulic balancing pressure (via hydraulic balancing liquid) from the one or more conduit(s) (64) to a piston assembly of a clutch pack, or *vice versa.* The aforementioned one or more conduit is preferably different from the one or more conduit for conduction of hydraulic activation pressure. The aforementioned conduit may be a part of same (low pressure system) shared with one or more conduit for conduction of lubrication liquid, and/or one or more conduit for conduction of cooling liquid mentioned elsewhere herein. It is an aspect as mentioned elsewhere herein that the hydraulic balancing liquid is also used for cooling; accordingly the one or more conduit(s) for conduction of hydraulic balancing pressure may also be utilized for cooling.

The body (62) of the clutch input shaft (60) or the body (82) of the stator (80) may be disposed with one or more conduit(s) for conduction of lubrication liquid (e.g. oil) for lubrication of one or more components (*e.g.* clutch bearings). The body (62, 82) may comprises at least one aperture or annular recess for passage of the lubrication liquid from the one or more conduit(s) to the clutch pack, or *vice versa.* The aforementioned one or more conduit is preferably different from the one or more conduit for conduction of hydraulic activation pressure. The aforementioned conduit may be a part of same (low pressure system) shared with one or more conduit for conduction of hydraulic balancing pressure, and/or one or more conduit for conduction of cooling liquid mentioned elsewhere herein. It is an aspect that the lubrication liquid is also used for cooling; accordingly the one or more conduit(s) for conduction of lubrication liquid may also be utilized for conduction of cooling liquid.

The body (62) of the clutch input shaft (60) or the body (82) of the stator (80) may be disposed with one or more conduit(s) for conduction of cooling liquid (*e.g.* oil) for cooling of each clutch pack (40,30). The body (62, 82) may comprises at least one aperture or annular recess for passage of the cooling liquid from the one or more conduit(s) to the clutch pack, or *vice versa.* The aforementioned one or more conduit is preferably different from the one or more conduit for conduction of hydraulic activation pressure. The aforementioned conduit may be a part of same (low pressure system) shared withone or more conduit for conduction of hydraulic balancing pressure, and/or one or more conduit for conduction of lubrication liquid mentioned elsewhere herein. It is an aspect that the cooling liquid is also used for hydraulic balancing; accordingly the one or more conduit(s) for conduction of cooling liquid may also be utilized for hydraulic balancing.

Liquid for cooling of clutch packs, balancing chamber and lubrication (*e.g.* bearings) may typically be shared; they supplied as part of a 'low pressure' system. Accordingly, the cooling liquid and the hydraulic balancing liquid may be one and the same liquid. Accordingly, the cooling liquid, the hydraulic balancing liquid and the lubrication liquid may be one and the same liquid. In the cross-feed aspect described herein, the cooling liquid is synonymous with the hydraulic balancing liquid.

Liquid for hydraulic activation of clutch packs is typically not shared with the liquid for cooling of clutch packs, balancing chamber and lubrication. Liquid for hydraulic activation is typically at high pressure, and is supplied by a high pressure system.

The body (62) of the clutch input shaft (60) may be disposed with one or more CIS access ports (66, 66c, 66d) on an exterior (*e.g.* radial or axial outer surface) of the body (62) for passage of the liquid to/from the respective CIS conduit (64, 64c, 64d) (*e.g.* **FIGs. 2****,** **5****,** **5A****,** **6****,** **8** **Panel A, 8 Panel B).** All the CIS access ports (66, 66c, 66d) are disposed on the body (62) of clutch input shaft (60) at an axial position that is at an (E) side of ES clutch pack (40). All the CIS access ports (66, 66c, 66d) are disposed on the body (62) of clutch input shaft (60) at an axial position that is only at an (E) side of ES clutch pack (40). More in particular, each CIS conduit (64, 64c, 64d) may be provided with a CIS access port (66, 66c, 66d) connecting the CIS conduit (64, 64c, 64d) to the exterior (*e.g*. radial or axial outer surface) of the body (62) of the clutch input shaft (60). A CIS access port (66, 66c, 66d) disposed on the clutch input shaft (60) at an axial position that is at an (E) side of ES clutch pack (40) means that the CIS access port (66, 66c, 66d) does not axially overlap with the ES clutch pack (40), in particular does not axially overlap with a (E) side of the ES clutch pack (40).

The body (82) of the stator (80) may be disposed with one or more stator access ports (86, 86c, 86d) on an exterior (*e.g.* radial or axial outer surface) of the body (82) for passage of the liquid to/from the respective stator conduit (84, 84c, 84d) (*e.g.* **FIG. 3**). All the stator access ports (86, 86c, 86d) are disposed on the body (82) of stator (80) at an axial position that is at an (E) side of ES clutch pack (40). All the stator access ports (86, 86c, 86d) are disposed on the body (82) of the stator (80) at an axial position that is only at an (E) side of ES clutch pack (40). More in particular, each respective stator conduit (84, 84c, 84d) may be provided with a stator access port (86, 86c, 86d) connecting the respective stator conduit (84, 84c, 84d) to the exterior (*e.g.* radial or axial outer surface) of the body (82) of the stator (80).

A stator access port (86, 86c, 86d) disposed on the stator (80) at an axial position that is at an (E) side of ES clutch pack (40) means that the stator access port (86, 86c, 86d) does not axially overlap with the ES clutch pack (40), in particular does not axially overlap with a (E) side of the ES clutch pack (40).

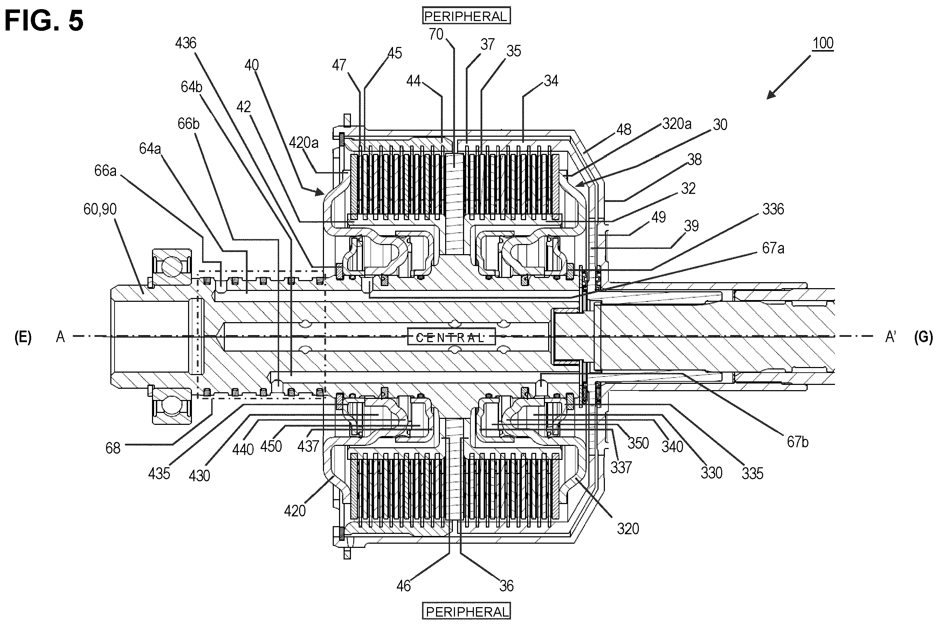

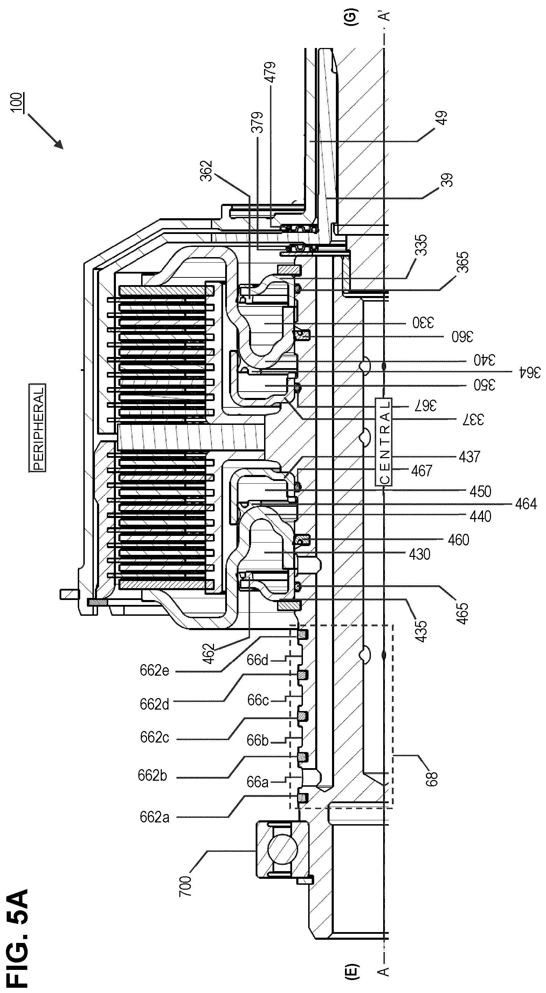

Where there is a plurality of CIS access ports (66, 66c, 66d), at least some of them may be spaced axially separated on a CIS distribution ring (68) that is an axial portion of (of the body (62) of) the clutch input shaft (60) within which the plurality of CIS access ports (66) is clustered. Exemplary CIS distribution ring (68) is indicated in **FIGs. 2****,** **5** and **5A****.** The CIS distribution ring (68) is preferably disposed (only) on a (E) side of the clutch input shaft (60). A CIS distribution ring (68) disposed on the clutch input shaft (60) at an axial position that is (only) at an (E) side of ES clutch pack (40) means that the CIS distribution ring (68) does not axially overlap with the ES clutch pack (40), in particular does not axially overlap with a (E) side of the ES clutch pack (40).

Each CIS access port (66, 66a-d) may be flanked by a pair of annular seal (e.g. CIS access port (66a) flanked by annular seal (662a and b); CIS access port (66b) flanked by annular seal (662b and c); CIS access port (66c) flanked by annular seal (662c and d); CIS access port (66d) flanked by annular seal (662d and e). Each annular seal (662a to e) is to be attached to the input shaft (60). It may be any type of annular seal, including but not limited to an O-ring, vulcanised or lip seal. Each annular seal may be disposed in a groove. Each pair annular seals (662a and b; 662b and c; 662c and d; 662d and e) prevent or reduce axial leakage of liquid to or from the CIS access port (66a; 66b; 66c; 66d respectively) when coupled with a liquid stator (of a liquid slip-ring assembly). Exemplary annular seals (662a to e) are indicated separately in **FIG. 5A** for the double clutch unit of **FIG. 5****.**

Where there is a plurality of stator (80) access ports (86, 86c, 86d), at least some of them may be spaced axially separated on a stator distribution ring (88) that is an axial portion of the (body (82) of) stator (80) within which the plurality of stator access ports (86, 86c, 86d) is clustered. Exemplary stator distribution ring (88) is indicated in **FIG. 3****.** The stator distribution ring (88) is preferably disposed (only) on a (E) side of the stator (80).

A stator distribution ring (88) disposed on the stator (80) at an axial position that is at an (E) side of ES clutch pack (40) means that the stator distribution ring (88) does not axially overlap with the ES clutch pack (40), in particular does not axially overlap with a (E) side of the ES clutch pack (40).

By comprising the axial liquid distributor (90) within a body (62) of the clutch input shaft (60), a radial compactness of the dual clutch drive (100) is improved since a separate liquid distributor is avoided which would increases radial size of the dual clutch drive (100).

By comprising the axial liquid distributor (90) within a body (82) of the stator (80), a weight of the clutch is supported from below the stator (no overhang). Further, there is an improved axial compactness. Further, more and/or wider bore conduits can be distributed around a larger annular body (82) of the stator (80).

Disposing all CIS access ports (66) or CIS distribution ring (68) on the clutch input shaft (60), or all stator access ports (86) or stator distribution ring (88) on the stator (80) at an axial position that is (only) at an (E) side of ES clutch pack (40) allows a liquid stator (of a liquid slip-ring assembly) servicing the access ports/distribution ring to be positioned to a side of the clutch packs, thereby improving radial compactness of the double clutch unit. It also avoids a need for access port (66, 86) or distribution ring (68, 88) on both (E) and (G) sides of the clutch unit.

The double clutch unit (100) further comprises an ES clutch output hub (49) attached in fixed rotational relation to the ES clutch pack output (44) and configured for dismountable coupling to a first input shaft of a gearbox.

The double clutch unit (100) further comprises an ES clutch unit output drum (48) axially and rotationally fixed to the ES clutch output hub (49) (*e.g.* by one or more welded joints (49a)).

The ES clutch unit output drum (48), in particular a peripheral ring thereof, is rotationally fixed (e.g. by spline connection, by interlocking of protrusion/recesses) to the ES clutch pack output (44), thereby transmitting torque between the ES clutch pack output (44) and the ES clutch output hub (49). The ES clutch output hub (49) is disposed at a (G) side of the GS clutch pack (30).

The double clutch unit (100) further comprises an GS clutch output hub (39) attached in fixed rotational relation to the GS clutch pack output (34) and configured for dismountable coupling to a first input shaft of a gearbox.

The double clutch unit (100) further comprises a GS clutch unit output drum (38) axially and rotationally fixed to a GS clutch output hub (39) (*e.g.* by one or more welded joints (39a)).The GS clutch unit output drum (38), in particular a peripheral ring thereof, is rotationally fixed to the GS clutch pack output (34), thereby transmitting torque between the GS clutch unit output drum (34) and the GS clutch output hub (39).

The rotationally fixed attachment may be achieved by forming the GS clutch unit output drum (38) and GS clutch pack output (34) as a monoblock (formed from one piece), or by one or more welded joints.

A GS and ES clutch output hub (49,39) disposed at a (G) side of the GS clutch pack (30) means that the GS and ES clutch output hubs (49,39) are at an axial position that is at a (G) side of the GS clutch pack (30) and that does not axially overlap with the GS clutch pack (30).

The double clutch unit is typically pre-loaded by a spring on the (G) side that provides an axial force to the output drum (49) in a direction of the (E) side. The force is transferred (G) → (E) direction through different thrust bearings ((second) thrust bearing (479); (third) thrust bearing (379) to the input shaft (60), and finally to angular contact bearing (700) (see for instance, **FIG. 5A****).**

A (second) thrust bearing (479) may be provided between the ES clutch output hub (49) and GS clutch output hub (39) configured to axially support rotation, and to transfer the axial force of the spring from the GS clutch output hub (39) to the ES clutch output hub (49) (see for instance, **FIGs. 5A** and **7A****).**

A (third) thrust bearing (379) may be provided between the GS clutch output hub (39) and input shaft (60) configured to axially support rotation and transfer the axial force of the spring via the ES clutch output hub (49), second thrust bearing (479), GS clutch output hub (39), to the input shaft (60) (see for instance, **FIGs. 5A** and **7A****).**

Exemplary thrust bearing are indicated in **FIGs. 5A** and **7A****.**

Because both the GS and ES clutch output hub (49,39) disposed at a (G) side of the GS clutch pack (30,40), a radial compactness of the double clutch unit (100) is improved. The effect of the GS and ES clutch output hub (49,39) being disposed at a (G) side of the GS clutch pack (30) such that the GS and ES clutch output hubs (49,39) do not axially overlap with the GS clutch pack (30) (i.e. are not nested radially centrally with respect to the clutch packs) is an increase in radial compactness because the hubs are not nested radially centrally with respect to the clutch packs. As a consequence, a diameter of the double clutch unit (100) is reduced. Reduction in radial compactness reduces package size, and also increases life span of components *e.g.,* of annular seals (480 a to f) on the stator. Typically one or both of the ES and GS clutch output hub (49,39) would be disposed central of the clutch pack (30,40) in the prior art which increases radial size.

The ES clutch pack (40) may further comprise an ES clutch pack piston (420) for controllable activation (engaged, slipping, dis-activation (disengaged)) of the ES clutch pack (40). The ES clutch pack piston (420) is axially slidable responsive to expansion or contraction of an ES clutch pack pressure chamber (430). The ES clutch pack pressure chamber (430) is defined by an ES sliding chamber part (440) of the ES clutch pack piston (420) and an ES axially stationary part (435). The ES clutch pack pressure chamber (430) contains pressurised hydraulic activation liquid supplied via the axial liquid distributor (90) (comprised in the input shaft (60) or comprised in the stator (80)). The ES sliding chamber part (440) and/or ES axially stationary part (435) may contain a holding space for the pressurised hydraulic activation liquid. The ES clutch pack piston (420) including the ES sliding chamber part (440) may be formed from one piece or one or more pieces connected by one or more permanent joints (*e.g.* welding, bolts). Axial sliding of the ES axially stationary part (435) relative to the input shaft (60) may be limited or prevented by a split ring (436). The ES clutch pack piston (420) compresses the ES clutch pack (40) thereby controlling clutch engagement, slipping, and disengagement. The ES clutch pack pressure chamber (430), ES stationary part (435) and ES sliding chamber part (440) of the ES clutch pack pressure chamber (430) are annular structures disposed (peripherally) around the input shaft (60). They are provided central of the ES clutch pack (40). They are provided in axial direction from engine side (E) to gearbox side (G): axially stationary part (435), ES clutch pack pressure chamber (430), sliding chamber part (440).

The ES clutch pack piston (420) comprises an ES annular pressure plate (420a) configured for application of activating force to the 1st end (41a) of the ES clutch pack (40). The ES annular pressure plate (420a) comprises an annular body, extending from the sliding chamber part (440). The ES annular pressure plate (420a) is devoid of clutch fingers.

Providing an ES annular pressure plate circumvents a point of stress - a clutch finger - which can cause mechanical failure under higher forces. An annular pressure plate more evenly distributes forces to the 1st end (41a) of the ES clutch pack (40).

The double clutch unit (100) may further comprise an ES clutch pack piston hydraulic balancing chamber (450). The ES clutch pack piston hydraulic balancing chamber (450) may be defined by the sliding chamber part (440) of the ES clutch pack piston (420) (ES sliding chamber part (440)) and a balancing chamber, BC, axially stationary part (437) (ES BC axially stationary part (437)). The ES sliding chamber part (440) and/or ES BC axially stationary part (437) may contain a holding space for hydraulic activation liquid. The ES BC axially stationary part (437) may be welded e.g. to input shaft (60), or to the common clutch reaction plate (70), or to the drive plate (46).

Axial sliding of the ES BC axially stationary part (437) relative to the input shaft (60) may abut a shoulder (61) forming a part of the body (62) of the output shaft (60). The shoulder (60) is an axial portion of the input shaft (60) body (62) having an increased peripheral height compared with the axial portions of the input shaft (60) body (62) disposed central of the ES BC axially stationary part (437), ES clutch pack pressure chamber (430), ES sliding chamber part (440), and ES clutch pack piston hydraulic balancing chamber (450)).

Hydraulic balancing liquid is provided to the ES clutch pack piston hydraulic balancing chamber (450) to counter a build-up hydraulic pressure caused by the rotational speed of the fluid in the ES clutch pack pressure chamber (430). The hydraulic balancing liquid may be provided under low pressure to/from the ES clutch pack piston hydraulic balancing chamber (450).

The ES clutch pack piston hydraulic balancing chamber (450), ES BC axially stationary part (437), ES sliding chamber part (440) are annular structures disposed around the input shaft (60). They are provided in axial direction from engine side (E) to gearbox side (G): ES sliding chamber part (440), ES clutch pack piston hydraulic balancing chamber (450), ES BC axially stationary part (437).

An annular seal (467) may optionally be disposed between the axially stationary part (437) of the ES clutch pack piston hydraulic balancing chamber (450) and the input shaft (60). It may be attached to the input shaft (60). It may be any type of annular seal, including but not limited to an O-ring, vulcanised or lip seal. It may be disposed in a groove.

An annular seal (460) may be provided between the axially sliding part (440) of the ES clutch pack piston pressure chamber (430) and the input shaft (60) (e.g. lip-seal (460) attached to the input shaft (60)). It may be disposed in a groove. It may be attached to the input shaft (60).

An annular seal (465) may be provided between the axially stationary part (435) of the ES clutch pack piston pressure chamber (430) and the input shaft (60) (e.g. O-ring (465) attached to the input shaft (60)). It may be disposed in a groove. It may be attached to the input shaft (60).

An annular seal (464) may be provided between the axially stationary part (437) of the ES clutch pack piston hydraulic balancing chamber (450) and the axially sliding part (440) of the ES clutch pack piston pressure chamber (430) (e.g. vulcanized seal attached to the axially sliding part (440)). It may be disposed in a groove. It may be attached to the axially sliding part (440).

An annular seal (462) may be provided between the axially sliding part (440) of the ES clutch pack piston pressure chamber (430), and the axially stationary part (435) of the ES clutch pack piston pressure chamber (430) (e.g. vulcanized seal attached to the axially stationary part (435)). It may be disposed in a groove. It may be attached to the axially stationary part (435).

Exemplary seals are indicated in **FIGs. 5A****,** and **7A** (annular seal 460, 462, 464 only).

Rotation of the ES clutch pack piston (420), ES sliding chamber part (440) and BC axially stationary part (437) is typically synchronised with rotation of the input shaft (60). Friction between input shaft (60) and seals, and between pistons and seals is sufficient that rotation is typically synchronised.

The GS clutch pack (30) may further comprise a GS clutch pack piston (320) for controllable activation (engaged, slipping, dis-activation (disengaged)) of the GS clutch pack (30).The GS clutch pack piston (320) is axially slidable responsive to expansion or contraction of an GS clutch pack pressure chamber (330). The GS clutch pack pressure chamber (330) is defined by a GS sliding chamber part (340) of the GS clutch pack piston (320) and a GS axially stationary part (335). The GS clutch pack pressure chamber (330) contains pressurised hydraulic activation liquid supplied via the axial liquid distributor (90) (comprised in the input shaft (60) or comprised in the stator (80)). The GS sliding chamber part (340) and/or GS axially stationary part (335) may contain a holding space for the pressurised hydraulic activation liquid. The GS clutch pack piston (320) including the GS sliding chamber part (340) may be formed from one piece or one or more pieces connected by one or more permanent joints (*e.g.* welding, bolts). Axial sliding of the GS axially stationary part (335) relative to the input shaft (60) may be limited or prevented by a split ring (336). The GS clutch pack piston (320) compresses the GS clutch pack (30) thereby controlling clutch engagement, slipping, and disengagement. The GS clutch pack pressure chamber (330), GS stationary part (335) and GS sliding chamber part (340) of the GS clutch pack pressure chamber (330) are annular structures disposed (peripherally) around the input shaft (60). They are provided central of the GS clutch pack (30). They are provided in axial direction from gearbox side (G) to engine side (E): GS axially stationary part (335), GS clutch pack pressure chamber (330), GS sliding chamber part (340).

The GS clutch pack piston (320) comprises a GS annular pressure plate (320a) configured for application of activating force to the 1st end (31a) of the GS clutch pack (30). The GS annular pressure plate (320a) comprises a substantially flat annular body, extending from the sliding chamber part (340). The GS annular pressure plate (320a) is devoid of clutch fingers.

Providing an GS annular pressure plate circumvents a point of stress - a clutch finger - which can cause mechanical failure under higher forces. An annular pressure plate more evenly distributes forces to the 1st end (31a) of the GS clutch pack (40).

The double clutch unit (100) may further comprise an GS clutch pack piston hydraulic balancing chamber (450). The GS clutch pack piston hydraulic balancing chamber (350) may be defined by the sliding chamber part (340) of the GS clutch pack piston (320) (GS sliding chamber part (340)) and a balancing chamber, BC, axially stationary part (337) (GS BC axially stationary part (337)). The GS sliding chamber part (340) and/or GS BC axially stationary part (337) may contain a holding space for hydraulic activation liquid. The GS BC axially stationary part (337) may be welded *e.g.* to input shaft (60), or to the common clutch reaction plate (70), or to the drive plate (46).

Axial sliding of the GS BC axially stationary part (337) relative to the input shaft (60) may abut a shoulder (63) forming a part of the body (62) of the output shaft (60). The shoulder (60) is an axial portion of the input shaft (60) body (62) having an increased peripheral height compared with the axial portions of the input shaft (60) body (62) disposed central of the GS BC axially stationary part (337), GS clutch pack pressure chamber (330), sliding chamber part (340), GS clutch pack piston hydraulic balancing chamber (350).

Hydraulic balancing liquid is provided to the GS clutch pack piston hydraulic balancing chamber (350) to counter a build-up hydraulic pressure caused by the rotational speed of the fluid in the GS clutch pack pressure chamber (330). The hydraulic balancing liquid may be provided under low pressure to/from the GS clutch pack piston hydraulic balancing chamber (350).

The GS clutch pack piston hydraulic balancing chamber (350), BC axially stationary part (337), sliding chamber part (340) are annular structures disposed around the input shaft (60). They are provided in axial direction from gearbox side (G) to engine side (E): sliding chamber part (340), GS clutch pack piston hydraulic balancing chamber (350), BC axially stationary part (337).

An annular seal (367) may optionally be disposed between the axially stationary part (337) of the GS clutch pack piston hydraulic balancing chamber (350) and the input shaft (60). It may be attached to the input shaft (60). It may be any type of annular seal, including but not limited to an O-ring, vulcanised or lip seal. It may be disposed in a groove.

An annular seal (360) may be provided between the axially sliding part (340) of the GS clutch pack piston pressure chamber (330) and the input shaft (60) (*e.g.* lip-seal (360) attached to the input shaft (60)). It may be disposed in a groove. It may be attached to the input shaft (60).

An annular seal (365) may be provided between the axially stationary part (335) of the GS clutch pack piston pressure chamber (330) and the input shaft (60) (e.g. O-ring (365) attached to the input shaft (60)). It may be disposed in a groove. It may be attached to the input shaft (60).

An annular seal (364) may be provided between the axially stationary part (337) of the GS clutch pack piston hydraulic balancing chamber (350) and the axially sliding part (340) of the GS clutch pack piston pressure chamber (330) (e.g. vulcanized seal attached to the axially sliding part (340)). It may be disposed in a groove. It may be attached to the axially sliding part (340).

An annular seal (362) may be provided between the axially sliding part (340) of the GS clutch pack piston pressure chamber (330), and the axially stationary part (335) of the GS clutch pack piston pressure chamber (330) (e.g. vulcanized seal attached to the axially stationary part (335)). It may be disposed in a groove. It may be attached to the axially stationary part (335).

Exemplary seals are indicated in **FIGs. 5A** and **7A** (annular seals 360, 362, 364 only).

Rotation of the GS clutch pack piston (420), GS sliding chamber part (340) and GS BC axially stationary part (337) is typically synchronised with rotation of the input shaft (60). Friction between input shaft (60) and seals, and between pistons and seals is sufficient that rotation is typically synchronised.

The dual clutch unit (100) preferably comprises a clutch housing configured to protect the components of the clutch. The clutch housing comprises a body disposed peripheral to the components of the clutch and which extends centrally both sides of the components of the clutch. The clutch housing is a stationary part *i.e.* it does not rotate synchronous to the clutch packs.

Components of the dual clutch are made according to methods known in the art. For instance, casting, welding, milling and the like. Components are typically assembled by axially sliding onto the input shaft (60) in a (E) to (G) direction for the ES clutch pack (40), or in a (G) to (E) direction for the GS clutch pack (30). Components are welded where indicated. Components may be rotationally fixed using a spline connection or using friction.

Components of the dual clutch are made using materials known in the art, for instance steel for the clutch input shaft (60), stator (80) where present, clutch pack inputs (42, 32), clutch pack outputs (44,34), clutch pack separator plates (45,35), common clutch reaction plate (70), ES clutch unit drive plate (46), GS clutch unit drive plate (36), output drums (48, 38), output hubs (49, 39), clutch pack pistons (420, 320), sliding chamber parts (440, 340), axially stationary parts (435, 335), BC axially stationary parts (437, 337). Seals and/or O-rings may be formed from a rubberised material, from polyether ether ketone (PEEK) or the like. The friction plates (47,37) may be formed from steel and disposed with a friction material such as organic polymer, Kevlar, ceramic, carbiotic, feramic.

### Examples

**FIGs. 5****,** **6****,** **7****,** **10** and **11** show a double clutch unit (100) having an engine (E) side and a gear box side (G) as described herein, a central part or direction and peripheral part or direction. Each double clutch unit (100) comprises principal components that are:
- an input shaft (60);
- an ES clutch pack (40) - having an ES clutch pack input (42), an ES clutch pack output (44); a plurality of friction plates (47) attached to the ES clutch pack output (44), a plurality of separator plates (45) attached to the ES clutch pack input (42);
- a GS clutch pack (30) - having a GS clutch pack input (32) and an GS clutch pack output (34), a plurality of friction plates (37) attached to the GS clutch pack output (34), a plurality of separator plates (35) attached to the GS clutch pack input (32);
- an ES clutch pack piston (420) - and associated ES clutch pack pressure chamber (430), ES sliding chamber part (440), an ES axially stationary part (435), ES balancing chamber (450), BC axially stationary part (437);
- a GS clutch pack piston (320) - and associated GS clutch pack pressure chamber (330), GS sliding chamber part (340), a GS axially stationary part (335), GS balancing chamber (350), BC axially stationary part (337),
- an ES clutch unit output drum (48) axially and rotationally fixed at a central-most part to an ES clutch output hub (49) and at a peripheral-most part to the ES clutch pack output (44);
- an GS clutch unit output drum (38) axially and rotationally fixed at a central-most part to an GS clutch output hub (39) and at a peripheral-most part to the GS clutch pack output (34).

Attached in fixed and rotational relation by one or more weld joints to the input shaft (60) are a common clutch reaction plate (70), an ES clutch unit drive plate (46) and a GS clutch unit drive plate (36).

Torque (*e.g.* from an internal combustion engine, electric machine, flywheel) enters the input shaft (60) at the engine side (E), and is transmitted to the ES clutch pack input (42) and GS clutch pack input (32) *via* the ES clutch unit drive plate (46) and the GS clutch unit drive plate (36) respectively. Torque is transferred from the ES clutch pack input (42) or GS clutch pack input (32) to the ES clutch pack output (44) or GS clutch pack output (34), *via* the friction plates (47, 37) and separator plates (45, 35), when the respective clutch pack (40,30) is activated by the respective clutch pack piston (420, 320); reaction force is applied to the ES clutch pack (40) or GS clutch pack (30) via the common clutch reaction plate (70).

In **FIG. 5****,** the input shaft (60) comprises two shown CIS conduits (64a, 64b) of an axial liquid distributor for axial transport of fluid to and/or from the clutch interior. Each CIS conduit (64a, 64b) has at one end ((E) side) a CIS access port (66a, 66b respectively) connecting the CIS conduit (64a, 64b) to a surface of the body (62) of the clutch input shaft (60). The CIS access ports (66a, 66b) are clustered and disposed on a distribution ring (68). Each CIS conduit (64a, 64b) also has a CIS remote port (67a, 67b respectively) spaced axially distant from the CIS access port (66a, 66b) towards the (G) side of the clutch input shaft (60), connecting the CIS conduit to a location within the clutch interior. One CIS remote port (67a) services the ES clutch pack pressure chamber (430), one CIS remote port (67b) services the GS clutch pack pressure chamber (330).

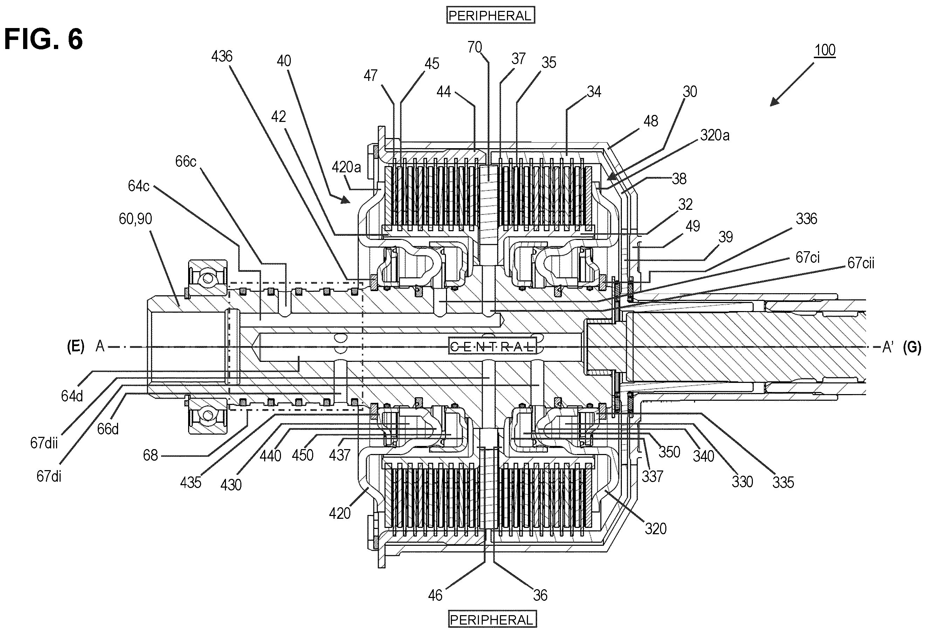

**FIG. 5A** is a detail of FIG. 5 (which is also applicable to FIGs. 6 and 10), showing a plurality of CIS access ports (66a-d), each flanked by a pair of annular seals, namely, CIS access port (66a) is flanked by annular seal (662a and b); CIS access port (66b) is flanked by annular seal (662b and c); CIS access port (66c) is flanked by annular seal (662c and d); CIS access port (66d) is flanked by annular seal (662d and e). Each annular seal (662a to e) is attached to the input shaft (60). Further shown is a plurality of seals, namely
- an annular seal (467) disposed between the axially stationary part (437) of the ES clutch pack piston hydraulic balancing chamber (450) and the input shaft (60);
- an annular seal (460) disposed between the axially sliding part (440) of the ES clutch pack piston pressure chamber (430) and the input shaft (60);
- an annular seal (465) disposed between the axially stationary part (435) of the ES clutch pack piston pressure chamber (430) and the input shaft (60
- an annular seal (464) disposed between the axially stationary part (437) of the ES clutch pack piston hydraulic balancing chamber (450) and the axially sliding part (440) of the ES clutch pack piston pressure chamber (430)
- an annular seal (462) disposed between the axially sliding part (440) of the ES clutch pack piston pressure chamber (430) and the axially stationary part (435) of the ES clutch pack piston pressure chamber (430)
- an annular seal (367) disposed between the axially stationary part (337) of the GS clutch pack piston hydraulic balancing chamber (350) and the input shaft (60).
- an annular seal (360) disposed between the axially sliding part (340) of the GS clutch pack piston pressure chamber (330) and the input shaft (60)
- an annular seal (365) disposed between the axially stationary part (335) of the GS clutch pack piston pressure chamber (330) and the input shaft (60)
- an annular seal (364) disposed between the axially stationary part (337) of the GS clutch pack piston hydraulic balancing chamber (350) and the axially sliding part (340) of the GS clutch pack piston pressure chamber (330)
- an annular seal (362) disposed between the axially sliding part (340) of the GS clutch pack piston pressure chamber (330), and the axially stationary part (335) of the GS clutch pack piston pressure chamber (330)

A (second) thrust bearing (479) is disposed between the ES clutch output hub (49) and GS clutch output hub (39)
A (third) thrust bearing (379) is disposed between the GS clutch output hub (39) and input shaft (60)
In **FIG. 6****,** the input shaft (60) of **FIG. 5** has been rotated around its axis of rotation to reveal two different CIS conduits (64c, 64d) of the axial liquid. Each CIS conduit (64c, 64d) has at one end ((E) side) a CIS access port (66c, 66d respectively) connecting the CIS conduit (64c, 64d) to a surface of the body (62) of the clutch input shaft (60). The CIS access ports (66c, 66d) are clustered and disposed on the distribution ring (68). Each CIS conduit (64c, 64d) also has two CIS remote ports (67ci + cii; 67di + dii respectively) spaced axially distant from the CIS access port (66c, 66d) towards the (G) side of the clutch input shaft (60), connecting the CIS conduit to a location within the clutch interior.

One CIS remote port (67ci) of a first CIS conduit (64c) services the ES clutch pack balancing chamber (450), and the other CIS remote port (67cii) of the first CIS conduit (64c) services the ES clutch pack (40) to provide cooling liquid. In particular, the other CIS remote port (67cii) opens into a channel (not shown) of the common clutch reaction plate (70) which opens into a gap (not shown) central of the ES clutch input (42). The ES clutch input (42) is provided holes or slots (not shown) that allow the cooling liquid to moving though the clutch plates (44, 47) for cooling of the ES clutch pack (40) under centrifugal force.

One CIS remote port (67di) of a second CIS conduit (64d) services the GS clutch pack balancing chamber (350) and the other CIS remote port (67dii) of the second CIS conduit (64d) services the GS clutch pack (30) to provide cooling liquid. In particular, the other CIS remote port (67dii) opens into a channel (not shown) of the common clutch reaction plate (70) which opens into a gap (not shown) central of the GS clutch input (32). The GS clutch input (42) is provided holes or slots (not shown) that allow the cooling liquid to moving though the clutch plates (34, 37) for cooling of the GS clutch pack (30) under centrifugal force.

In **FIG. 10****,** the input shaft (60) comprises a first CIS conduit (64c). The first CIS conduit (64c) has at one end ((E) side) a CIS access port (66c) and connected to a CIS-1stC-ES remote port (67ci) servicing the ES clutch pack balancing chamber (450) and to a CIS-1stC-GS remote port (67cii), servicing one or more GS cooling channels (not shown) for providing cooling liquid to the GS clutch pack (30). In particular, 1stC-GS remote port (67cii) opens into a cooling channel (not shown) of the common clutch reaction plate (70) which opens into a gap (not shown) central of the GS clutch input (32). The GS clutch input (32) is provided holes or slots (not shown) that allow the cooling liquid to moving though the GS clutch plates (34, 37) for cooling of the GS clutch pack (30) under centrifugal force.

In **FIG. 10****,** the input shaft (60) further comprises a second CIS conduit (64d). The second CIS conduit (64c) has at one end ((E) side) a CIS access port (66d) and connected to a CIS-2ndC-ES remote port (67di) servicing the GS clutch pack balancing chamber (350) and a CIS-2ndC-GS remote port (67dii), servicing one or more ES cooling channels (not shown) for providing cooling liquid to the ES clutch pack (40). In particular, the CIS-2ndC-GS remote port (67dii) opens into a channel (64d) of the common clutch reaction plate (70) which opens into a gap (not shown) central of the ES clutch input (42). The ES clutch input (42) is provided holes or slots (not shown) that allow the cooling liquid to moving though the clutch plates (44, 47) for cooling of the ES clutch pack (40) under centrifugal force.

In **FIG. 7****,** a different configuration of **FIGs. 5** and **6****,** a stator (80) having an annular body (82) is disposed in an annular groove of the input shaft (60). The input shaft (60) is formed from a peripheral annular section (60b) and a central section (60a) attached in fixed rotational and axial relation. No conduits or ports of an axial liquid distributor within the stator (80) are shown but are nonetheless present.

**FIG. 7A** is a detail of FIG. 7, showing a plurality of stator remote ports (87a-e),each flanked by a pair of annular seal, namely, stator remote port (87a) is flanked by annular seal (480a and b); stator remote port (87b) is flanked by annular seal (480b and c); stator remote port (87c) is flanked by annular seal (480c and d); stator remote port (87d) is flanked by annular seal (480d and e), stator remote port (87e) is flanked by annular seal (480e and f). Further shown is a plurality of seals, namely:
- an annular seal (462) disposed between the axially sliding part (440) of the ES clutch pack piston pressure chamber (430) and the axially stationary part (435) of the ES clutch pack piston pressure chamber (430);
- an annular seal (460) disposed between the axially sliding part (440) of the ES clutch pack piston pressure chamber (430) and the input shaft (60);
- an annular seal (464) disposed between the axially stationary part (437) of the ES clutch pack piston hydraulic balancing chamber (450) and the axially sliding part (440) of the ES clutch pack piston pressure chamber (430);
- an annular seal (362) disposed between the axially sliding part (340) of the GS clutch pack piston pressure chamber (330), and the axially stationary part (335) of the GS clutch pack piston pressure chamber (330);
- an annular seal (360) disposed between the axially sliding part (340) of the GS clutch pack piston pressure chamber (330) and the input shaft (60);
- an annular seal (364) disposed between the axially stationary part (337) of the GS clutch pack piston hydraulic balancing chamber (350) and the axially sliding part (340) of the GS clutch pack piston pressure chamber (330);

A (first) thrust bearing (471) is disposed between the ES clutch output hub (49) and GS clutch output hub (39). A second thrust bearing (479) is disposed between the ES clutch output hub (49) and GS clutch output hub (39). A (third) thrust bearing (379) is disposed between the GS clutch output hub (39) and input shaft (60). Two radial bearings (469, 369) axially separated are disposed between the stator (80) and the input shaft (60).

In **FIG. 11****,** a different configuration of **FIG. 10****,** a stator (80) having an annular body (82) is disposed in an annular groove of the input shaft (60). The input shaft (60) is formed from a peripheral annular section (60b) and a central section (60a) attached in fixed rotational and axial relation. No conduits or ports of an axial liquid distributor within the stator (80) are shown but are nonetheless present.

In **FIG. 11****,** the input shaft (60) comprises an apertures (65ci, 65cii, 65di, 65dii) that each axially align respectively with:
- stator-1stC-ES remote port (87ci) to service the ES clutch pack balancing chamber (450);
- stator-1stC-GS remote port (87cii) to services one or more GS cooling channels (74c) for providing cooling liquid to the GS clutch pack (30);
- stator-2ndC-GS remote port (87di) to service the GS clutch pack balancing chamber (350); and
- stator-2ndC-ES remote port (87dii), services one or more ES cooling channels (74d) for providing cooling liquid to the ES clutch pack (40).

## Claims

1. A double clutch unit (100) for a transmission comprising:
- an engine (E) side friction clutch pack, ES clutch pack (40), and a gearbox (G) side friction clutch pack, GS clutch pack (30);
- a clutch input shaft (60) having an axis (A-A') of rotation;
- an axial liquid distributor (90), ALD (90), configured for transport of at least one liquid in an axial direction between the (E) side of the clutch input shaft and a location towards the (G) side of the clutch input shaft (60);
wherein:
- each clutch pack (40,30) has a clutch pack input (42, 32) and clutch pack output (44, 34);
- the clutch packs (40,30) are disposed in a parallel arrangement axially flanking a common clutch reaction plate (70);
- each clutch pack input (42, 32) is central of the clutch pack output (44, 34) such that torque is transmitted across each activated clutch pack (40, 30) in a central to peripheral direction;
- the ALD (90) comprises a plurality of axial liquid distributor, ALD conduits (24, 24c, 24d), each for the transport of liquid in an axial direction;
- a first ALD conduit (24c) of the plurality of ALD conduits services both an ES clutch pack piston balancing chamber (450) and one or more GS cooling channels (74c) for providing cooling liquid to the GS clutch pack (30);
- a second ALD (24d) of the plurality of ALD conduits, different from the first ALD conduit (24c), services both a GS clutch pack piston balancing chamber (350) and one or more ES cooling channels (74d) for providing cooling liquid to the ES clutch pack (40);
- the plurality of axial liquid distributor, ALD conduits (24, 24c, 24d), are disposed central of the ES clutch pack piston balancing chamber (450) and of the GS clutch pack piston balancing chamber (350) when viewed in on an axial projection of the double clutch unit (100).

2. The double clutch unit (100) according to claim 1, wherein:
- the plurality of ALD conduits is disposed within a body (62) of the clutch input shaft (60), and are clutch input shaft, CIS, conduits (64c, 64d),

3. The double clutch unit (100) according to claim 2, wherein each CIS conduit (64c, 64d) of the plurality of CIS conduits (64) is provided with a CIS access port (66c, 66d) connecting the CIS conduit (64c, 64d) to an exterior (e.g. radial or axial outer surface) of the body (62) of the clutch input shaft (60), wherein the CIS access port (66c, 66d) is:
- configured for passage of the liquid to/from the CIS conduit (64c, 64d); and
- disposed on the clutch input shaft (60) body (62) at an axial position that is at an (E) side of ES clutch pack (40) and does not axially overlap with the ES clutch pack (40).

4. The double clutch unit (100) according to claim 1, further comprising a stator (80) disposed within an annular groove or within a bore of the clutch input shaft (60) body (62), wherein:
- the stator (80) has a body (82); and
- the plurality of ALD conduits (24, 84; 24c, 84c; 24d, 84d) is disposed within the stator body (82), and are (known as) stator conduits (84c, 84d).

5. The double clutch unit (100) according to claim 4, wherein each stator conduit (84c, 84d) of the plurality of stator conduits is provided with a stator access port (86c, 86d) connecting the stator conduit (84c, 84d) to an exterior of the body (82) of the stator (80), wherein the stator access port (86) is:
- configured for passage of the liquid to/from the stator conduit (86c, 86d); and
- disposed on the stator (80) body (82) at an axial position that is at an (E) side of ES clutch pack (40) and does not axially overlap with the ES clutch pack (40).

6. The double clutch unit (100) according to any one of claims 1 to 5, further comprising:
- an ES clutch output hub (49) attached in fixed rotational relation to the ES clutch pack output (44) and configured for dismountable coupling to a first input shaft of a gearbox;
- an GS clutch output hub (39) attached in fixed rotational relation to the GS clutch pack output (34) and configured for dismountable coupling to a second input shaft of a gearbox;
wherein both the ES clutch output hub (49) and GS clutch output hub (39) are disposed at an axial position that is at a (G) side of the GS clutch pack (30) and does not axially overlap with the GS clutch pack (30).

7. The double clutch unit (100) according to claim 6, further comprising:
- an ES clutch unit output drum (48) attached and rotationally fixed to the ES clutch output hub (49), wherein:
- the ES clutch unit output drum (48) is attached and rotationally fixed to the ES clutch pack output (44);
- thereby transmitting torque between the ES clutch pack output (44) and the ES clutch output hub (49);
- a GS clutch unit output drum (38) attached and rotationally fixed to the GS clutch output hub (39), wherein
- the GS clutch unit output drum (38) attached and rotationally fixed to the GS clutch pack output (34);
- thereby transmitting torque between the GS clutch pack output (34) and the GS clutch output hub (39).

8. The double clutch unit (100) according to any one of claims 1 to 7, wherein:
- torque from the clutch input shaft (60) is transmitted to each clutch pack input (42, 32) via a pair of drive plates (46, 36), one for each clutch pack input (42, 32);
- the ES clutch unit drive plate (46) is rotationally and axially fixed to a portion of the ES clutch pack input (42) that is located on the (G) side of the ES clutch pack input (42); and
- the GS clutch unit drive plate (36) is rotationally and axially fixed to a portion of the GS clutch pack input (32) that is located on the (E) side of the GS clutch pack input (32).

9. The double clutch unit (100) according to any one of claims 1 to 8, wherein:
- the ES clutch unit drive plate (46) is disposed only central of the ES clutch pack input (42); and
- the GS clutch unit drive plate (36) is disposed only central of the GS clutch pack input (32).

10. The double clutch unit (100) according to any one of claims 1 to 9, wherein the
- the ES clutch pack (40) comprises a plurality of friction plates (47) intercalated between a plurality of separator plates (45);
- the GS clutch pack (30) comprises a plurality of friction plates (37) intercalated between a plurality of separator plates (35); and
- at least the
ES clutch pack (40) friction plates (47) and separator plates (45); and
GS clutch pack (30) friction plates (37) and separator plates (35) have mirrored symmetric identity across a mirror plane perpendicular to an axis of rotation (A-A') of the ES clutch pack (40) and GS clutch pack (30).

11. The double clutch unit (100) according to any one of claims 1 to 10, further comprising a plurality of springs, wherein
- each spring is disposed:
- between each pair of separator plates (45, 35);
- at a central end of a gap between the pairs of separator plates (45,35); and
- the plurality of springs are biased to maintain the respective separator plates (45,35) spaced apart to reduce drag torque.

12. The double clutch unit (100) according to any one of claims 1 to 11, wherein
- the ES clutch pack (40) further comprises an ES clutch pack piston (420) for controllable activation of the ES clutch pack (40), wherein the ES clutch pack piston (420) comprises an annular pressure plate (420a) configured for application of activating force to a 1st end (41a) of the ES clutch pack (40); and
- the GS clutch pack (30) further comprises an GS clutch pack piston (320) for controllable activation of the GS clutch pack (30), wherein the GS clutch pack piston (320) comprises an annular pressure plate (320a) configured for application of activating force to a 1st end (31a) of the GS clutch pack (40).
